# EUROPÄISCHE PATENTSCHRIFT

(11) **EP 0 816 736 B1**
(45) Veröffentlichungstag und Bekanntmachung des Hinweises auf die Patenterteilung: **10.01.2001**
(21) Anmeldenummer: 97110683.6
(22) Anmeldetag: 01.07.1997
(51) Int. Cl.: F16L 3/24

(54) **Halterung zum Lagern eines Rohres**
Support for bearing a pipe
Attache pour supporter un tuyau

(30) Priorität: 04.07.1996 DE 19626852
(43) Veröffentlichungstag der Anmeldung: 07.01.1998
(73) Patentinhaber: Witzenmann GmbH Metallschlauch-Fabrik Pforzheim, 75175 Pforzheim (DE)
(72) Erfinder: Berger, Peter W., D-75181 Pforzheim-Eutingen (DE); Wild, Andreas, D-72669 Unterensingen (DE)
(74) Vertreter: Lemcke, Rupert, Dipl.-Ing.

(56) Entgegenhaltungen:
- EP-A- 0 773 397
- DE-A- 3 110 716
- DE-A- 3 820 290
- DE-U- 9 206 801
- DE-U- 9 206 803
- DE-U- 9 407 484
- DE-U- 9 414 096
- DE-U- 29 513 823
- DE-U- 29 515 032
- PATENT ABSTRACTS OF JAPAN vol. 018, no. 550 (M-1690), 20.Oktober 1994 & JP 06 193772 A (SANKOO KIZAI KK), 15.Juli 1994,

## Beschreibung

Die Erfindung betrifft eine Halterung zum Lagern eines Rohres auf dem Flansch eines Profilträgers nach dem Oberbegriff des Anspruches 1.

Bei einer bekannten Bauform derartiger Halterungen ist der Bügel mit seinen Enden zwischen den Klemmbacken angeordnet und an die Klemmbakken angeschweißt und es ist ein Gleitelement für das Rohr zwischen den Klemmbacken die Bügelenden umfassend eingelegt. Damit wird diese Bauform verhältnismäßig teuer, da die Schweißarbeiten gegebenenfalls vor Ort von Hand durchgeführt werden müssen und auf der anderen Seite nur die Paarung miteinander verschweißbarer Materialien erlauben, womit die Verwendung vorher verzinkter Teile ausscheidet. Außerdem sind verhältnismäßig massive, in der Regel nur als Gußteil herstellbare Klemmbakken erforderlich, damit für die Verschweißung mit dem Bügel von seiten der Klemmbacken genügend Material zur Verfügung steht. Schließlich läßt sich diese bekannte Halterung bei einer Demontage nicht mehr vollkommen in ihre Einzelteile zerlegen, um diese gegebenenfalls an anderer Stelle wieder verwenden zu können.

Bei einer anderen durch die DE-A-31 10 716 bekannte Halterung sind die Bügelenden mit den zugeordneten Klemmbacken verschraubt. Dazu müssen die Bügelenden mit Gewinden und Anschlagscheiben versehen werden und es ist die Anbringung der Bügel nur über besondere, den Profilträger seitlich überragende Vorsprünge der Klemmbacken möglich, da sonst die Befestigungsmuttern nicht gehandhabt werden können. Dadurch ergibt sich eine unnötige überstehende Bauweise, für die nicht immer genügend Platz zur Verfügung steht.

Bei den bekannten Bauformen ist gemeinsam, daß sie insbesondere an unzugänglichen Stellen nur schwer zu montieren sind und im übrigen besondere, teilweise teure Werkzeuge für ihre Anbringung erfordern.

Aufgabe der Erfindung ist es daher, eine Halterung der eingangs genannten Art dahingehend auszubilden, daß der Bügel mit seinen Enden über dem Profilträger ohne das Erfordernis von Schweißarbeiten angebracht werden kann, wobei die Verbindung mit den zugeordneten Klemmbacken in einfacher, schnell durchführbarer und keine besondere Handhabung erfordernder Weise möglich sein soll. Dabei sollen auch die zugeordneten Klemmbacken gleichzeitig in ihrer Ausbildung vereinfacht, leichter herstellbar und damit verbilligt sein.

Die genannte Aufgabe ist erfindungsgemäß durch die kennzeichnenden Merkmale des Anspruches 1 gelöst.

Durch diese erfindungsgemäße Ausbildung besteht nunmehr die Möglichkeit, die Bügel im Bereich der Flanschoberfläche des Profilträgers anzubringen, wobei mit dem einfachen Einstecken der Bügelenden in die Ausnehmungen die Rast- oder Klemmmittel der Klemmbacken wirksam werden oder aber von einer leicht zugänglichen Seite der Klemmbacken her wirksam gemacht werden können. Dadurch ergibt sich eine einfache Montagemöglichkeit und auch eine problemlose Handhabung an schwer zugänglichen Stellen, wobei grundsätzlich das Erfordernis besonderer Werkzeuge entfallen kann.

Die erfindungsgemäß ausgebildeten Klemmbacken können in an sich herkömmlicher Weise und dabei beispielsweise als Gußteile ausgebildet sein, in deren Ausnehmung die Bügelenden beispielsweise durch Querstifte, eine Klemmschraube, einen Verriegelungskeil oder dergleichen festgelegt sein können.

In zweckmäßiger Ausbildung nach der Erfindung besteht jedoch auch die Möglichkeit, daß die Klemmbacken den Abschnitt zur Oberfläche des Flansches parallel und in Richtung auf diese einen namhaften Zwischenraum bildend aufweisen, und daß die Rast- oder Klemmmittel auf der dem Flansch zugewandten Seite des Abschnittes angeordnet und mit diesem zusammenwirkend gehalten sind.

Damit brauchen in den an den Klemmbacken gebildeten Zwischenraum nur noch die Rast- oder Klemmittel eingebracht zu werden und es können dann bereits die Bügelenden in einfacher Weise in die Klemmbacken eingesteckt und mit den Rast- oder Klemmmitteln in Eingriff gebracht werden, wozu es beispielsweise lediglich erforderlich ist, die Bügelenden durch eine pressende Verformung mit einer ein Widerlager für die Rastmittel bildenden Außenkontur zu versehen.

Insgesamt ergibt sich durch den Gegenstand der Erfindung für die Montage also nur ein geringer Zeitaufwand, dies gilt sowohl für die Herstellung von Führungslagern als auch für die Herstellung von Loslagern der Rohre, da sich diese nur durch verschiedene Formen der Bügel unterscheiden.

Für die Anwendung der Erfindung wurden zunächst die an sich üblichen, massiven Klemmbacken mit entsprechender Gestaltung erwähnt, an denen auch die Spannmittel in an sich üblicher Weise beispielsweise über eine Gewindebohrung angreifen können. In Zusammenhang mit dem erfindungsgemäßen Lösungsprinzip besteht nun aber auch die Möglichkeit, daß die Klemmbacken je aus einem sich im wesentlichen senkrecht zur Flanschkante erstreckkenden Blechzuschnitt so gebogen sind, daß aus dem Blechzuschnitt die seine Klemmnut bildenden Teile geformt sind, und daß der Blechzuschnitt den Abschnitt aufweist, in dessen benachbartem Zwischenraum die Rast- oder Klemmmittel gehalten sind. Damit lassen sich die betroffenen Klemmbacken aus einem beispielsweise durch einfaches Stanzen herstellbaren Blechzuschnitt durch ebenso einfache Biegevorgänge herstellen, wobei durch das Stanzen sogleich auch die Ausnehmungen für die Bügelenden anbringbar sind.

Nach einer ersten Bauform kann hier vorgesehen sein, daß der Blechzuschnitt so gebogen ist, daß das eine Ende des Blechzuschnittes unter Bildung der Klemmnut die Flanschkante umgreift, der mittlere Bereich des Blechzuschnittes auf der Oberfläche des Flansches aufliegt und das andere Ende des Blechzuschnittes unter Bildung eines gebogenen Zwischenstückes in eine zum mittleren Bereich parallele und diesem gegenüber einen namhaften Zwischenraum aufweisende Lage zurückgebogen ist, und daß die Enden des Bügels in eine neben der Flucht des jeweiligen Spannelementes gelegene Ausnehmung wenigstens des anderen Endes des Blechzuschnittes gesteckt und dort durch an ihnen angreifende und wenigstens mit dem anderen Ende des Blechzuschnittes zusammenwirkende Rastmittel gehalten sind.

Zweckmäßig ist es dabei, daß von der freien Endkante des anderen Endes der Blechzuschnitte wenigstens eine Stütznase in Richtung auf den mittleren Bereich der Blechzuschnitte abgebogen und endständig gegen diesen in Anlage ist, da sich durch eine solche Stütznase der genannte Zwischenraum der Klemmbacken genau formatieren läßt.

Um den Bügelenden einen noch besseren Halt zu geben, ist es sinnvoll, daß für die Bügelenden der Ausnehmung des anderen Endes der Blechzuschnitte fluchtend eine entsprechende Ausnehmung des mittleren Bereiches der Blechzuschnitte gegenüberliegt.

Nach einer zweiten Bauform im Rahmen der Erfindung kann vorgesehen sein, daß sich an die zur Flanschkante senkrechten Seiten des Abschnittes von diesem abgebogene und zur Oberfläche des Flansches senkrechte Wandteile anschließen, daß die Wandteile mit ihrer Abschlußkante auf der Oberfläche des Flansches abgestützt sind, daß die Wandteile den Profilträger über die Flanschkante hinaus überragen, und daß sich an die überragenden Wandteile die Flanschkante unter Bildung einer Klemmnut umgreifende Nasen anschließen. Um hier die Stabilität des Bauteiles noch weiter zu erhöhen, kann vorgesehen sein, daß sich an die zur Flanschkante parallele, von dieser entfernt über der Flanschoberfläche gelegene Seite des Abschnittes eine von diesem abgebogene und mit ihrer Abschlußkante auf der Oberfläche des Flansches abgestützte Wandung anschließt.

Vorteilhaft ist dabei für beide Bauformen, daß das Widerlager der aus einem Blechzuschnitt gebildeten Klemmbacken für das ggf. eine Bohrung des Zwischenstückes bzw. der Wandung durchdringende Spannelement ein Spannteil ist, das in einer Durchbrechung des anderen Endes bzw. des Abschnittes des Blechzuschnittes sitzend den Zwischenraum überbrückt. Für die erstgenannte Bauform der Klemmbacken kann der Durchbrechung des anderen Endes auch noch eine Durchbrechung des mittleren Bereiches fluchtend gegenüberliegen. Auch hier können die Bohrung für das Spannelement sowie die Durchbrechungen für das Zwischenstück sogleich bei der Herstellung des Blechzuschnittes angebracht werden. Im übrigen kann nunmehr bei der üblichen Verwendung einer Spannschraube als Spannelement das Spannteil ein einfaches quaderförmiges Bauteil mit einer Gewindebohrung für die Spannschraube sein, das für die Montage über die Durchbrechungen in die Klemmbacke einsteckbar ist und dann nach Anbringen der Spannschraube dort unverlierbar sitzt.

Die der anderen Flanschkante zugeordneten Klemmbacken können einfache Bauteile der bekannten Art sein, wobei nur wesentlich ist, daß sie die Flanschkante mit einer Klemmnut umgreifen und daß in ihnen die üblicherweise verwendete Spannschraube drehbar geführt und an ihnen mit dem Schraubenkopf widergelagert ist.

Für die Ausbildung der Rastmittel gibt es sehr vielfältige Möglichkeiten, deren Nennung vorliegend zu weit gehen würde. Bevorzugt sein sollen jedoch solche Rastmittel, die sich in einfacher Weise auf die Bügelenden aufstecken oder bereits vorher an den Klemmbacken montieren lassen.

In diesem Rahmen kann vorgesehen sein, daß die Rastmittel durch je eine im wesentlichen U-förmige, eine Querschnittsverjüngung der Enden des Bügels mit nach außen gerichteten Ausbeulungen ihrer Schenkel umgreifende Blechklammer gebildet sind, daß die Querschnittsverjüngung unter Belassung eines endständigen Bundes mit Abstand neben der Stirnkante der Bügelenden angeordnet ist, und daß die Blechklammer im Zwischenraum angeordnet und gegen den Bund sowie das andere Ende des Blechzuschnittes bzw. den Abschnitt in Anlage ist. Eine solche Blechklammer kann nach dem Einstecken des Bügelendes in die Klemmbacke von der Seite in den Zwischenraum eingesteckt und auf das Bügelende aufgesprengt werden, womit die Befestigung fertig ist. Für eine Demontage läßt sich die Blechklammer durch Aufweiten ihrer federnden Schenkel leicht wieder entfernen.

Eine andere Möglichkeit besteht darin, daß die Rastmittel durch je eine die Enden des Bügels und eine daran gebildete, in Richtung auf die Oberfläche des Flansches konisch zusammenlaufende Querschnittsverjüngung formschlüssig umfassende, federnd aufweitbare Hülse gebildet sind, daß die Querschnitssverjüngung unter Belassung eines endständigen Bundes mit Abstand neben der Stirnkante der Bügelenden angeordnet ist, und daß die im wesentlichen im Zwischenraum angeordnete Hülse einerseits in von der Flanschoberfläche fortweisender Richtung an der Klemmbacke, andererseits am Bund in Anlage ist. Auch eine solche Federhülse läßt sich leicht von der Seite her über den Zwischenraum der Klemmbacken in Position bringen, so daß dann die Bügelenden nur noch beispielsweise unter Verwendung eines Hammers leicht in die Federhülsen eingeschlagen werden müssen.

In näherer Ausgestaltung kann vorgesehen sein, daß die Hülse aus wenigstens zwei gleichen, durch achsparallele Teilungsfugen voneinander getrennten Segmenten besteht, und daß die Segmente durch in Umfangsnuten der Hülse sitzende, radial federnd aufweitbare Ringe zusammengehalten sind, wobei hier die axiale Widerlagerung der Hülsen dadurch geschehen kann, daß sie am Abschnitt in Anlage sind.

Eine andere Bauform kann derart gestaltet sein, daß die Hülse unter Belassung einer achsparallelen Trennfuge aus einem Blechabschnitt gebogen ist, und daß vom Hülsenmantel nach innen ausgebogene und sich in Richtung auf die Oberfläche des Flansches erstreckende Nasen in die Querschnittsverjüngung ragen und mit ihren Enden am Bund in Anlage sind. Dabei kann vorgesehen sein, daß die Hülse die Ausnehmung des anderen Endes des Blechzuschnittes bzw. des Abschnittes mit ihrem glatt zylindrischen Teil durchragt, wobei dieser zylindrische Teil zweckmäßigerweise dieses andere Ende des Blechzuschnittes bzw. den Abschnitt vom Profilträger fort um einen namhaften Abschnitt überragend ausgebildet sein kann, um bei der Montage zunächst das Einfädeln der Bügelenden zu erleichtern und dabei auch bei der Herstellung des richtigen Abstandes der durch den Bügel miteinander verbundenen Klemmbacken behilflich zu sein.

Bei allen Bauarten der Rastmittel in Form einer Hülse kann es ferner vorteilhaft sein, daß die Hülse mit einer endständigen konischen Aufweitung in die dazu passend ausgebildete, gegebenenfalls aufgebördelte Ausnehmung des mittleren Bereiches des Blechzuschnittes ragt, wodurch die Möglichkeit besteht, die Hülsen bereits in vormontiertem Zustand mit den Klemmbacken zu liefern.

Für die Ausbildung der nach der Erfindung alternativ vorgesehenen Klemmmittel kann vorgesehen sein, daß das Wiederlager der Klemmbacken für das Spannelement ein im Zwischenraum parallel zur Oberflläche des Flansches wenigstens in Grenzen verschiebbares Spannteil ist, und daß das Spannteil eine mit der Ausnehmung des anderen Endes des Blechzuschnittes bzw. des Abschnittes fluchtende Bohrung zur Aufnahme eines Endes des Bügels aufweist. Hier wird also das zur Widerlagerung des Spannelementes ohnehin vorhandene Spannteil gleichzeitig zur Verklemmung des Bügelendes herangezogen. Sitzt das Bügelende sowohl in der Ausnehmung des Endes bzw. des Abschnittes der Klemmbacke als auch in der Bohrung des Spannteiles, das im übrigen in Spannrichtung wenigstens in Grenzen frei beweglich ist, so wird beim Anziehen des Spannelementes das Bügelende durch das Spannteil mitgenommen und gegen den Rand der Ausnehmung des Endes des Blechzuschnittes bzw. des Abschnittes gedrückt. Auf diese Weise ist also durch Anwendung einfacher, ohnehin vorhandener Bauteile gleichzeitig auch eine sichere Befestigung der Bügelenden geschaffen.

Soweit vorstehend ausgewählte Rast- bzw. Klemmmittel genannt und im einzelnen erläutert sind, können diese ersichtlich größtenteils sowohl bei massiven Klemmbakken der zuerst genannten Art als bei aus einem Blechzuschnitt hergestellten Klemmbacken Anwendung finden, so daß insoweit Vertauschbarkeit der einzelnen Mittel gegeben ist, was sich wiederum auf die Gestehungskosten sowie auch die insgesamte Lagerhaltung auswirkt.

In weiterer Ausbildung des Erfindungsgegenstandes, für den selbständiger Schutz geltend gemacht wird, also auch Schutz im Zusammenhang mit anderen als der vorstehend beschriebenen erfindungsgemäßen Bauform einer Rohrhalterung, kann vorgesehen sein, daß der Abstand zwischen den Klemmbackenpaaren durch ein an der Oberfläche des Flansches anliegendes Gleitelement als Auflage für das Rohr überbrückt ist, und daß das Gleitelement wenigstens mittelbar an den Spannelementen und/ oder den Klemmbacken festgelegt ist. Dabei kann nach einer Gestaltungsmöglichkeit das Gleitelement mit seitlichen Vorsprüngen in den Zwischenraum der Klemmbacken bzw. Ausnehmungen benachbarter Wandteile eingreifen, wobei für die erste Bauform der Klemmbacken die Vorsprünge am Zwischenstück und an den benachbarten Stütznasen in Anlage sein können. Auch hier also die einfache Anbringung des Gleitelementes durch Steckverbindung mit den aus einem Blechzuschnitt hergestellten Klemmbacken ohne das Erfordernis besonderer Werkzeuge.

Wird dabei das Gleitelement durch ein Hohlprofil gebildet und werden dann die Vorsprünge durch die Enden einer in das Hohlprofil eingesteckten Profilstange dargestellt, so ergibt sich zusätzlich die einfache Möglichkeit, die Größe des Gleitelementes durch einfaches Absägen der genannten Teile von entsprechend längerem Vormaterial genau dem Abstand der Klemmbackenpaare anzupassen. Hier kann aber bezüglich des Hohlprofils auch so vorgegangen werden, daß dieses aus Hohlprofilabschnitten zusammengesetzt ist, die dann auf eine den jeweiligen Anforderungen in ihrer Länge entsprechende Profilstange aufgefädelt werden. Solche Hohlprofilabschnitte lassen sich gegebenenfalls auch in unterschiedlichen Längen leicht vorfertigen und bereithalten, so daß damit jede beliebige Größe des Gleitelementes zusammensetzbar ist.

Es besteht jedoch auch die Möglichkeit, daß das Gleitelement durch ein Hohlprofil gebildet ist, daß die Vorsprünge Bestandteil auf die Hohlprofilenden aufgesetzter Zwischenelemente sind, und daß die Zwischenelemente mit Fortsätzen formschlüssig in das Hohlprofil eingreifen. Hier kann also von einem entsprechenden Vormaterial das erforderliche Hohlprofilstück jeweils abgeschnitten und dessen Befestigung durch Aufsetzen der Zwischenelemente ermöglicht werden.

Eine abweichende Bauform kann dadurch gegeben sein, daß zwischen die Klemmbackenpaare ein aus Blech gebogenes Halteteil für das Gleitelement eingesetzt ist, daß das Halteteil eine zur Oberfläche des Flansches im wesentlichen parallele und mit Abstand angeordnete Wandung mit einer Ausnehmung zur Aufnahme des Gleitelementes aufweist, daß von der Wandung zu den Flanschkanten im wesentlichen parallele und auf der Oberfläche des Flansches im wesentlichen senkrecht aufstehende Wandelemente ausgehen, daß ein Wandelement formschlüssig passend zwischen den Klemmbacken sitzt, und daß das andere Wandelement mit Aussparungen auf die Spannelemente aufgesteckt ist. Hiermit ist also ein haubenförmiger Träger für das Gleitelement geschaffen, der wiederum in einfacher Weise zwischen den Klemmbackenpaaren durch Auf- bzw. Einstecken angebracht werden kann und damit das Gleitelement positioniert.

Damit das Gleitelement aus dem Träger nicht ohne weiteres herausfallen kann, kann vorgesehen sein, daß die Ausnehmung zur Aufnahme des Gleitelementes in den Ausnehmungsquerschnitt ragende Rastnasen zur klemmenden Befestigung des Gleitelementes aufweist. Auch können die Aussparungen des anderen Wandelementes die Spannelemente wenigstens teilweise hintergreifen, um so eine unverlierbare Halterung des haubenartigen Bauteils zu sichern.

In Weiterbildung des Gegenstandes der Erfindung kann nun auch vorgesehen werden, daß die den Bügel tragenden Klemmbacken der Klemmbackenpaare durch Ausbildung als ein beide Ausnehmungen für die Enden des Bügels aufweisendes Bauteil einstückig miteinander verbunden sind. Dies ist besonders dann empfehlenswert, wenn eine größere Menge von Klemmbackenpaaren benötigt wird, bei denen der gegenseitige Abstand der Paare gleichbleibend oder ähnlich ist, weil dann durch einen einzigen Fertigungsvorgang die beiden aus einem Blechzuschnitt bestehenden Klemmbacken zugleich hergestellt werden können.

Geht man von einer solchen einstückigen Ausbildung zweier Klemmbacken aus, so kann der zwischen diesen gebildete, zur Oberfläche des Flansches parallele Brückenabschnitt wenigstens eine Ausnehmung zur Aufnahme eines Gleitelementes als Auflage für das Rohr aufweisen, es kann also der Brückenabschnitt gleichzeitig zur Halterung des Gleitelementes herangezogen werden. Dabei kann die Ausnehmung so angeordnet sein, daß das Gleitelement auf der Oberfläche des Flansches aufliegt. Es besteht jedoch auch die Möglichkeit, dem Brückabschnitt eine mittlere, in Richtung auf die Flanschoberfläche gehende Vertiefung zu geben, auf der das Gleitelement aufliegt, um über Ausnehmungen der die Vertiefung begrenzenden Seitenflächen gehalten zu werden.

Für alle vorstehend geschilderten Bauformen kann vorgesehen sein, daß das Gleitelement ein im wesentlichen quaderförmiges Bauteil ist. Ferner ist es zweckmäßig, daß das Gleitelement und/oder die Profilstange und/oder die Zwischenelemente Bauteile aus Polyamid und gegebenenfalls als Spritzteil oder Strangpreßteil hergestellt sind.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine perspektivische Gesamtansicht einer erfindungsgemäßen Halterung mit zugehörigem Profilträgerabschnitt;
- Figur 2 und 3: ein Rastelement in Form einer Blechklammer in verschiedenen Ansichten;
- Figur 4: die Anordnung des Gegenstandes gemäß Figur 2 und 3 auf einem Bügelende zusammen mit einer ausschnittweise dargestellten Klemmbacke;
- Figur 5: ein Rastelement in Form einer Federhülse;
- Figur 6: die Anordnung des Rastelementes gemäß Figur 5 auf einem Bügelende mit einer ausschnittweise dargestellten Klemmbacke;
- Figur 7 bis 9: ein Klemmbackenpaar gemäß Figur 1 in drei verschiedenen Ansichten;
- Figur 10: eine Schnittansicht gemäß der Schnittlinie X-X in Figur 8;
- Figur 11: eine perspektivische Ansicht des Gegenstandes gemäß Figur 10 in ungeschnittener Form;
- Figur 12 und 13: zwei verschiedene Ansichten einer weiteren Bauform eines Rastelementes in Form einer Federhülse;
- Figur 14: die perspektivische Ansicht eines Gleitelementes;
- Figur 15 und 16: die Einzelteiles des Gleitelementes gemäß Figur 14;
- Figur 17 bis 20: verschiedene Ansichten eines Zwischenelementes für ein Gleitelement;
- Figur 21: ein Gleitelement mit einem Zwischenelement in nicht zusammengestecktem Zustand;
- Figuren 22 bis 24: ein aus Blech gebogenes Halteteil für ein Gleitelement in verschiedenen Ansichten.
- Figur 25: die teilweise Explosionsdarstellung einer anderen Bauform einer erfindungsgemäßen Halterung und
- Figuren 26 bis 28: die vollständige Halterung nach Figur 25 in drei verschiedenen Ansichten.

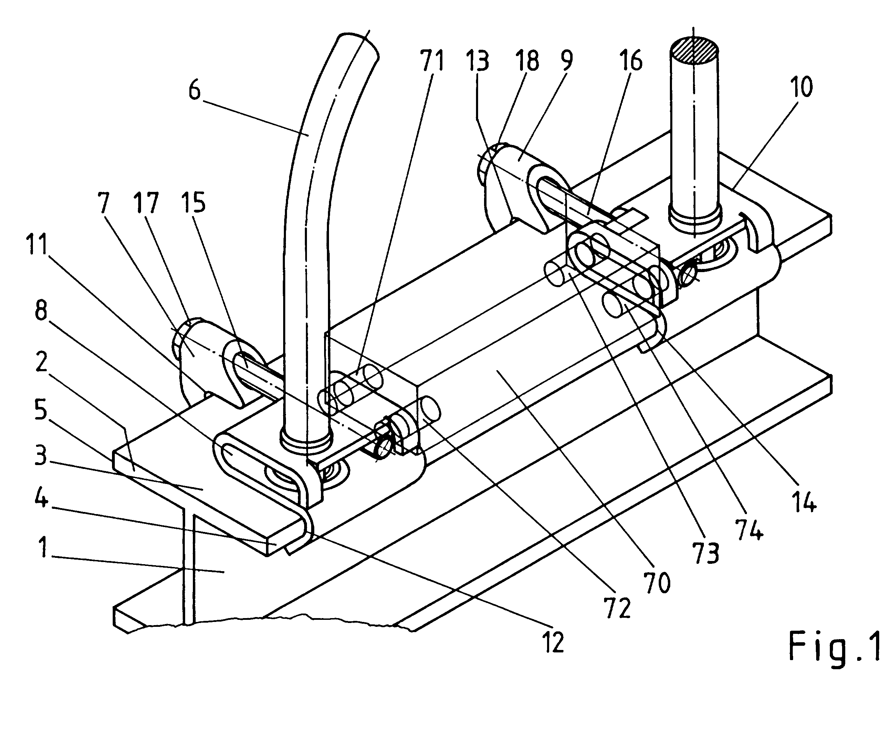

Figur 1 zeigt einen Profilträger 1 mit einem Flansch 2, der Flanschoberfläche 3 und den Flanschkanten 4 und 5.

Auf dem Flansch 2 soll ein nicht dargestelltes Rohr durch einen es umschlingenden, nicht vollständig dargestellten Bügel 6 gehalten werden, dessen Enden folglich am Profilträger 1 festgelegt werden müssen. Hierzu dienen Paare von Spannbacken 7, 8 bzw. 9, 10, die die Flanschkanten 4 bzw. 5 mit Klemmnuten 11 bis 14 umgreifen und durch Spannschrauben 15, 16 mit Köpfen 17, 18 wie aus der Zeichnung ersichtlich gegeneinander gezogen und damit auf dem Flansch 2 festgespannt sind.

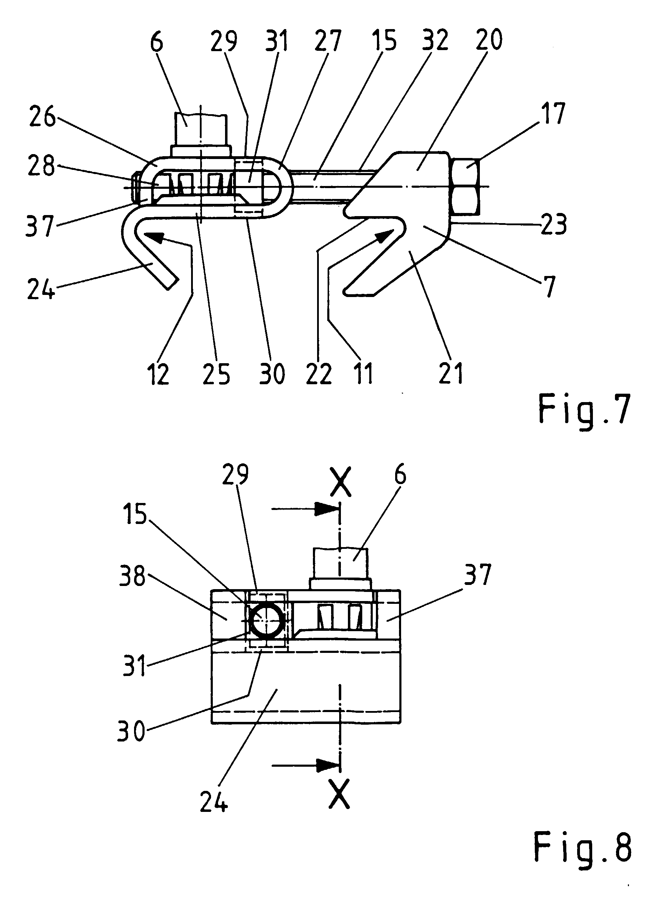

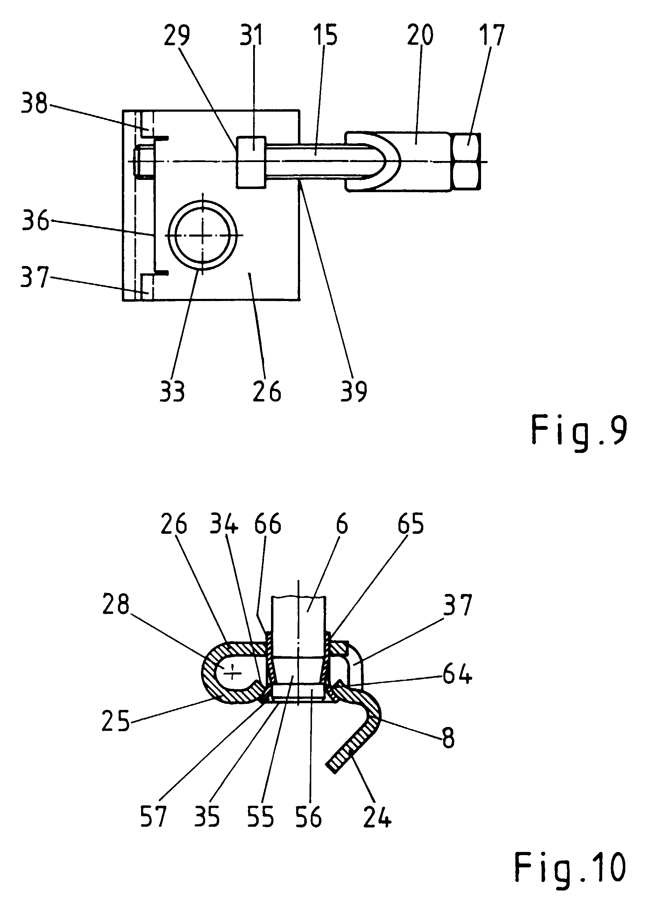

Nähere Einzelheiten der Anordnung eines Spannbackenpaares sind aus den Figuren 7 bis 11 ersichtlich und werden daran erläutert, wobei Figur 7 die Seitenansicht eines Spannbackenpaares, Figur 8 die Stirnansicht des Gegenstandes gemäß Figur 7, dort von links gesehen und Figur 9 die Draufsicht des Gegenstandes gemäß Figur 7 bedeuten. Es sei in den Figuren 7 bis 11 das linke Spannbackenpaar gemäß Figur 1 gewählt, so daß insoweit bereits die dort eingeführte Bezifferung weiterverwendet wird.

Wie die Figuren 7 und 9 zeigen, besteht die an sich bekannte Spannbacke 7 aus beispielsweise einem Gußteil mit einem Klemmbackenkörper 20 mit im wesentlichen würfelförmiger Außenkontur, an dem durch einen Schenkel 21 eine Klemmnut 11 gebildet ist, deren eine Flanke 22, die auf der Flanschoberfläche 3 zu liegen kommt, eine Wand des Klemmbackenkörpers 20 ist. Die Klemmbacke 7 weist eine Bohrung zum drehbaren Durchtritt der Spannschraube 15 auf, die mit ihrem Kopf 17 an der Fläche 23 der Klemmbacke 7 ihre Widerlagerung findet.

Demgegenüber ist, wie die Figuren 7 bis 11 zeigen, die Klemmbacke 8 aus einem Blechzuschnitt so gebogen, daß das eine Ende 24 des Blechzuschnittes die Klemmnut 12 bildet, der mittlere Bereich 25 des Blechzuschnittes die Auflage der Klemmbacke 8 auf der Flanschoberfläche 3 ermöglicht, und das andere Ende 26 des Blechzuschnittes unter Bildung eines gebogenen Zwischenstückes 27 in eine zum mittleren Bereich 25 parallele und diesem gegenüber einen namhaften Zwischenraum 28 aufweisende Lage zurückgebogen ist.

Der mittlere Bereich 25 und das andere Ende 26 des Blechzuschnittes weisen Durchbrechungen 29, 30 auf, in die ein quaderförmiges Spannelement 31 den Zwischenraum 28 überbrückend eingesteckt ist. Das Spannelement 31 hat eine Gewindebohrung für das Außengewinde 32 der Spannschraube 15, so daß durch Eindrehen der Spannschraube 15 in das Zwischenstück 31 die Klemmbacken 7 und 8 gegeneinander und damit am Flansch 2 des Profilträgers festgespannt werden können.

Neben der Flucht der Spannschraube 15 weisen anderes Ende 26 und mittlerer Bereich 25 des Blechzuschnittes miteinander fluchtende Ausnehmungen 33, 34 auf, in die das Ende 35 des Bügels 6 unter Vermittlung eines noch zu beschreibenden Rastelementes eingesteckt ist.

An das andere Ende 26 des Blechzuschnittes bzw. dessen freie Endkante 36 schließen sich noch Stütznasen 37, 38 an, die in Richtung auf den mittleren Bereich 25 des Blechzuschnittes abgebogen und endständig gegen diesen in Anlage sind.

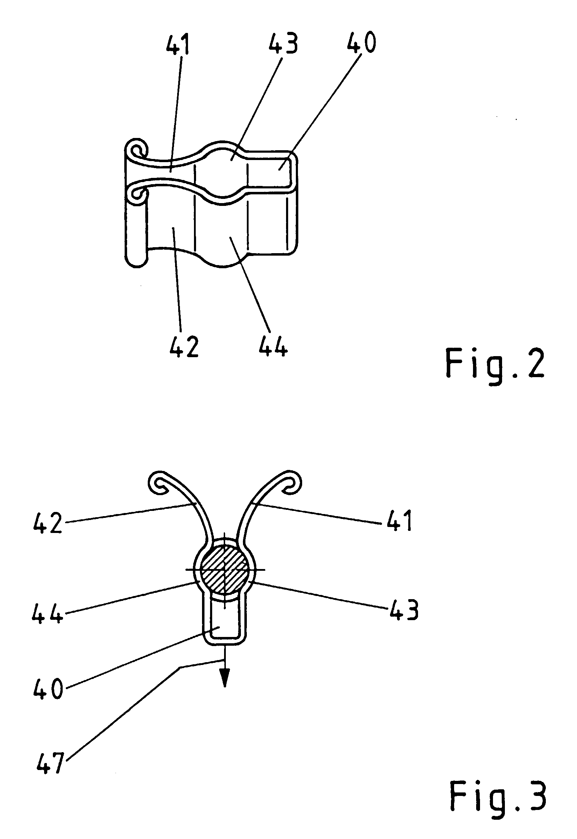

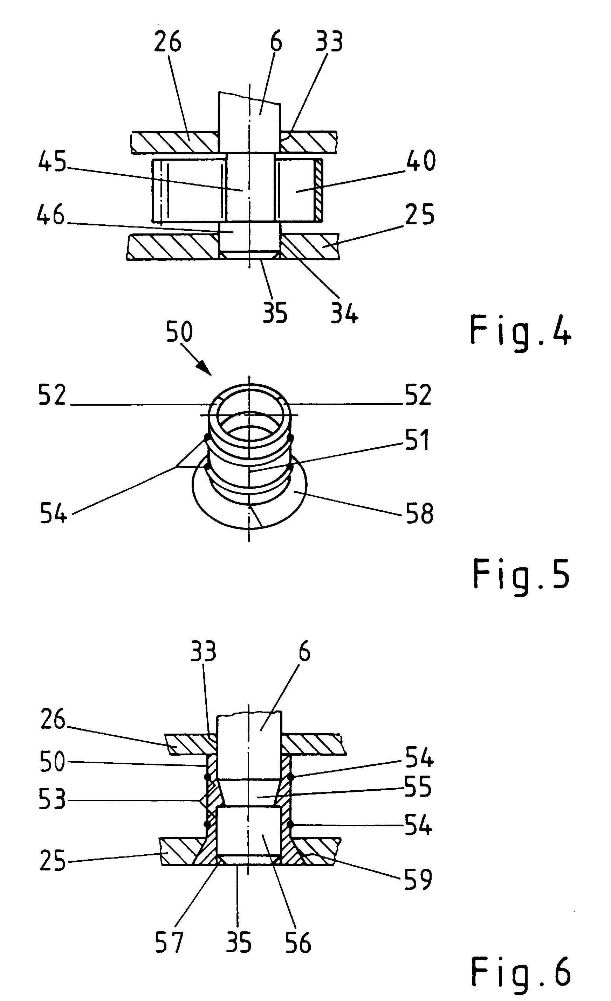

Ausgehend von der insoweit anhand der Figuren 1 und 7 bis 11 gegebenen Teilebeschreibung zeigen die Figuren 2 bis 4 ein Rastelement in Form einer U-förmigen Blechklammer 40 mit Schenkeln 41 und 42, die mit Ausbeulungen 43, 44 versehen sind. Die so geformte Blechklammer läßt sich, wie die Figuren 3 und 4 zeigen, auf eine Querschnittsverjüngung 45 des Endes 35 des Bügels stecken so, daß die Ausbeulungen, 43, 44 die Querschnittsverjüngung 45 in sich aufnehmen. Am Ende 35 des Bügels 6 bleibt dann noch neben der Querschnittsverjüngung 45 ein Bund 46 stehen.

Befindet sich nun, wie aus Figur 4 ersichtlich, die Klammer 40 einerseits in Anlage an den Bund 46 und andererseits in Anlage gegen das andere Ende 26 des Blechzuschnittes der Klemmbacke 8, so ist das Ende 35 des Bügels 6 gegen Herausziehen aus den Ausnehmungen 33, 34 gesichert. Andererseits läßt sich die Klammer 40 bei der Montage leicht von der Seite aus auf die Querschnittsverjüngung 45 stecken bzw. bei der Demontage wieder unter Aufweiten der Schenkel 41, 42 entsprechend dem Pfeil 47 von der Querschnittsverjüngung 45 abziehen.

Die Figuren 5 und 6 zeigen entsprechend ein Rastmittel in Form einer Hülse 50, die aus drei gleichen, durch jeweils eine achsparallele Teilungsfunge 51 voneinander getrennten Segmenten 52 besteht. Die Segmente weisen gemeinsame Umfangsnuten 53 auf, in die radial federnd aufweitbare Ringe 54 aus Metall eingesetzt sind.

Die so dargestellte Hülse 50 umfaßt, wie aus Figur 6 ersichtlich, formschlüssig eine konisch zum mittleren Bereich 25 des Blechzuschnittes zusammenlaufende Querschnittsverjüngung 55 des Bügelendes 35, wobei die Verjüngung 55 am Bügelende 35 einen Bund 56 stehen läßt.

Wird nunmehr das Ende 35 des Bügels 6 über die Ausnehmung 33 des anderen Endes 26 des Blechzuschnittes in die Hülse 50 gesteckt, was durch eine Abschrägung 57 der Stirnkante des Bundes 56 erleichtert werden kann, so wird die Hülse 50 radial aufgeweitet und schnappt dann mit ihrer entsprechenden inneren Formgebung in die Querschnittsverjüngung 55 ein. Nunmehr ist das Ende des Bügels 6 durch Abstützung der Hülse 50 gegen den Bund 56 einerseits und gegen das andere Ende 26 des Blechzuschnittes andererseits gegen Herausziehen gehalten.

Wie Figur 6 zeigt, kann die Hülse 50 außerdem noch mit einer endständigen konischen Aufweitung 58 in der entsprechend geformten Ausnehmung 59 des mittleren Bereiches 25 des Blechzuschnittes sitzen, um so eine stabilere Halterung zu ergeben.

Anhand der Figuren 2 bis 6 sind aus zahlreichen denkbaren Möglichkeiten zwei Bauformen für ein Rastmittel zur Befestigung der Enden des Bügels 6 erläutert. Eine bevorzugte Ausführungsform zeigen in Ergänzung hierzu die Darstellungen in den Figuren 7 bis 13.

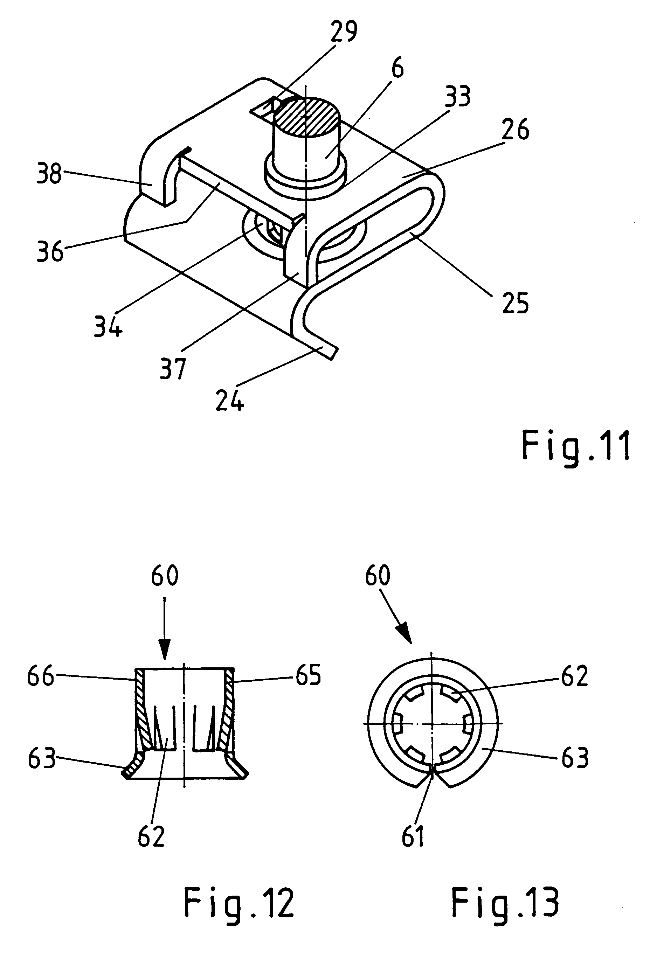

Danach besteht, wie insbesondere die Figuren 12 und 13 zeigen, das Rastmittel aus einer Hülse 60, die aus einem Blechstück unter Belassung einer achsparallelen Trennfuge 61 gebogen ist. Dabei sind aus dem Hülsenmantel Nasen 62 ausgeschnitten und nach radial innen gebogen, die sich (siehe Figur 10) mit ihren freien Enden in Richtung auf den mittleren Bereich 25 des Blechzuschnittes erstrecken. Damit greifen die Nasen in die bereits anhand der Figur 6 geschilderte konische Querschnittsverjüngung 55 des Endes 35 des Bügels 6 ein und gelangen gegen den Bund 56 in Anlage.

Andererseits weist die Hülse 60 am bezogen auf Figur 10 bzw. 12 unteren Ende eine konische Aufweitung 63 auf, mit der sie an einer entsprechend konischen Gestaltung der Ausnehmung 34 in Anlage ist, wobei die konische Gestaltung der Ausnehmung 34 durch eine Aufbörderlung 64 in Richtung auf das andere Ende 26 des Blechzuschnittes hergestellt sein kann. Damit ist die Hülse 60 und auch das Ende des Bügels 6 gegen Herausziehen aus der Klemmbacke 8 gesichert.

Mit ihrem oberen, zylindrischen Ende 65 durchragt die Hülse 60 die Ausnehmung 33 des anderen Endes 26 des Blechzuschnittes, wobei ein Überstand 66 gebildet ist, der insbesondere die gegenseitige Abstandsjustierung der Klemmbacken 8 und 10 (Figur 1) gegeneinander erleichtert, indem die Enden des Bügels 6 zunächst in den zylindrischen Teil 65 der Hülse 60 eingesteckt werden, bevor sie dann beispielsweise mit Hilfe eines Hammers ganz in die Hülsen 60 eingeschlagen werden.

Für eine Demontage ist es hier bei zunächst vom Profilträger 1 abgeschraubter Rohrhalterung in einfacher Weise möglich, die Klemmbacke 8 beispielsweise bezogen auf Figur 10 nach oben von der Hülse 60 herunter auf den Bügel 6 zu schieben. Nunmehr liegt das Ende des Bügels 6 mit der Hülse 60 frei, so daß die Hülse beispielsweise durch Einsetzen eines Schraubenziehers in die Fuge 61 aufgeweitet und vom Ende des Bügels 6 heruntergenommen werden kann.

Figur 1 zeigt außerdem, daß zwischen den Klemmbackenpaaren ein quaderförmiges Gleitelement 70 zur gleitenden Auflage des nicht dargestellten Rohres angeordnet ist. Dieses Gleitelement 70 hat endständig auf beiden Seiten zapfenförmige Vorsprünge 71 bis 74, die in den Zwischenraum 28 (siehe insbesondere Figur 7 und 10) der Klemmbacken 8 und 10 eingreifen und sich am Zwischenstück 27 einerseits und an der Stütznase 37 andererseits in Anlage befinden. Damit ist das Gleitelement 70, dessen Länge im wesentlichen dem Abstand zwischen den Klemmbacken 8 und 10 entspricht, fixiert.

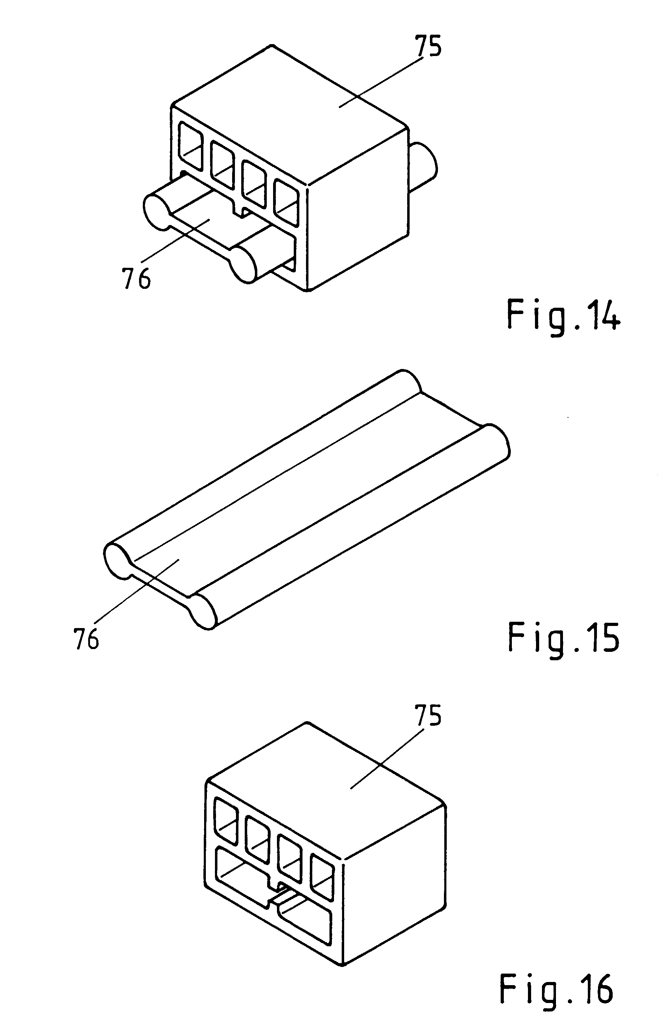

Um nun bezüglich eines solchen Gleitelementes ohne Bevorratung unterschiedlicher Einzelteile eine leichtere Anpassung an verschiedene gegenseitige Abstände der Klemmbacken 8, 10 vornehmen zu können, kann nach der Ausführungsform gemäß den Figuren 14 bis 16 vorgesehen sein, daß das Gleitelement durch ein Hohlprofil 75 gebildet ist und daß die Vorsprünge durch die Enden einer in das Hohlprofil eingesteckten Profilstange 76 dargestellt werden, deren beispielsweise aus Figur 15 ersichtliche Breite den Außenmaßen zwischen den Vorsprüngen 71, 72 bzw. 73, 74 entspricht. Ein solches Hohlprofilstück 75 mit dazu passendem Abschnitt einer Profilstange 76 lassen sich leicht von entsprechendem, längerem Vormaterial den gewünschten Maßen entsprechend absägen. Eine andere Möglichkeit besteht darin, einheitliche Profilstangenstücke 75 gegebenenfalls unterschiedlicher Länge bereits zu haben, um diese dann auf das gewünschte Maß auf ein entsprechendes Profilstangenstück 76 aufzufädeln.

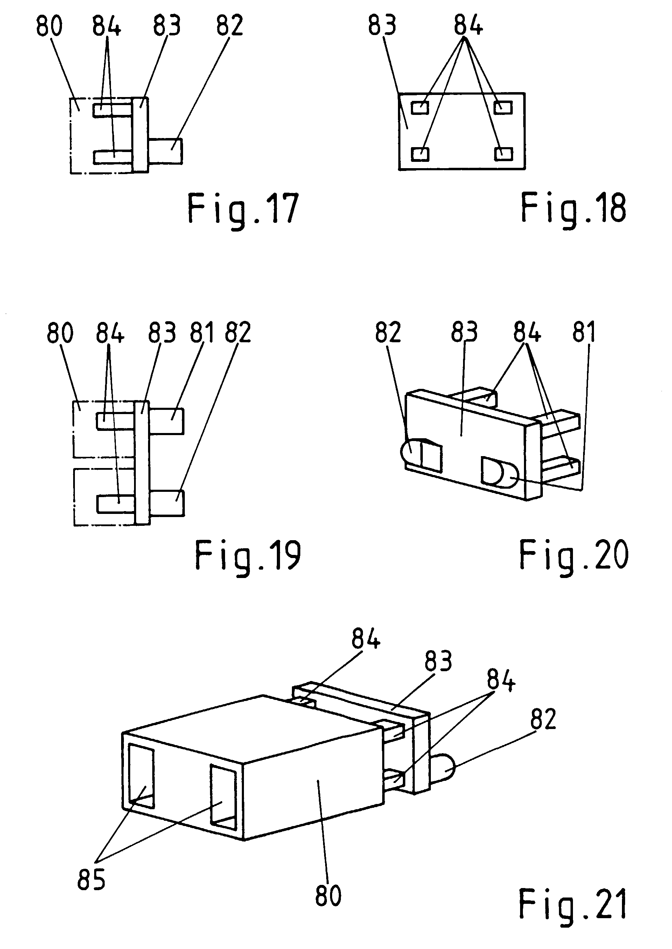

Gemäß den Figuren 17 bis 21 kann jedoch auch vorgesehen sein, daß das Gleitelement durch ein passendes Hohlprofil 80 gebildet ist und daß die Vorsprünge 81, 82 Bestandteil von Zwischenelementen 83 sind, die mit Fortsätzen 84 formschlüssig in das Hohlprofil 80 eingreifen, im vorliegenden Falle in die äußerenden Ecken der Kanäle 85 des Hohlprofils 80.

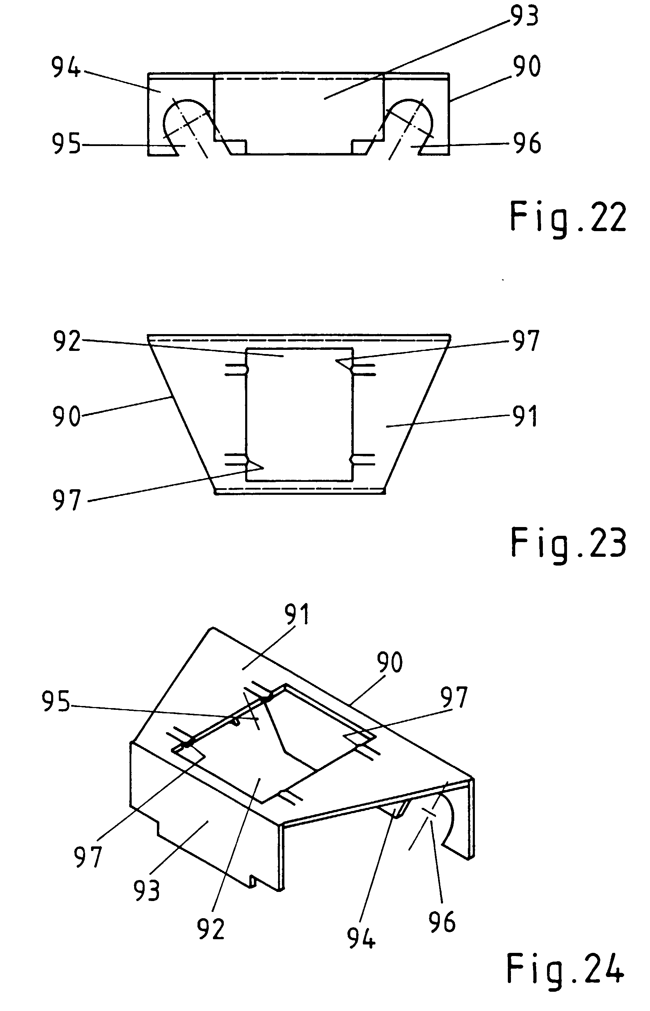

Nach den Figuren 22 bis 24 besteht eine andere Möglichkeit auch darin, daß zwischen die Klemmbackenpaare 7, 8 bzw. 9, 10 ein aus Blech gebogenes Halteteil 90 für das nicht dargestellte, wieder beispielsweise im wesentlichen blockförmige Gleitelement eingesetzt ist. Das Halteteil 90 weist eine in eingebautem Zustand zur Oberfläche 3 des Flansches 2 im wesentlichen parallele und mit Abstand gegenüber der Oberfläche 3 angeordnete Wandung 91 mit einer Ausnehmung 92 zur Aufnahme des Gleitelementes auf. Von der Wandung 91 zu den Flanschkanten 4, 5 im wesentlichen parallele und auf der Oberfläche 3 des Flansches 2 im wesentlichen senkrecht aufstehende Wandelemente 93, 94 abgebogen. Dabei ist das Wandelement 93 so bemessen, daß es formschlüssig passend zwischen die Klemmbacken 8 und 10 eingesetzt werden kann, während das Wandelement 94 Aussparungen 95, 96 aufweist, mit denen es auf die Spannschrauben 15, 16 zwischen den jeweiligen Spannbacken 7, 8 bzw. 9, 10 aufgesetzt werden kann. Um hier eine unverlierbare Halterung zu gewährleisten, können die Aussparungen 95, 96 mittels der aus der Zeichnung ersichtlichen Schrägstellung so ausgebildet sein, daß sie die Spannschrauben 15, 16 wenigstens teilweise untergreifen. Zur unverlierbaren Halterung des nicht dargestellten Gleitelementes kann ferner vorgesehen sein, daß beispielsweise durch Prägen aus der Wandung 91 in die Ausnehmung 92 ragende Rastnasen 97 gebildet sind, die das Gleitelement festklemmen.

Die vorstehend beschriebenen Gleitelemente bestehen zumindest bezüglich des mit dem Rohr in Berührung kommenden Teiles zweckmäßigerweise aus Polyamid, was jedoch auch für die Bauteil 76 bzw. 83 gelten kann. Im übrigen können diese Bauteile im Strangpreßverfahren bzw. hinsichtlich des Teiles 83 durch Spritzguß hergestellt sein.

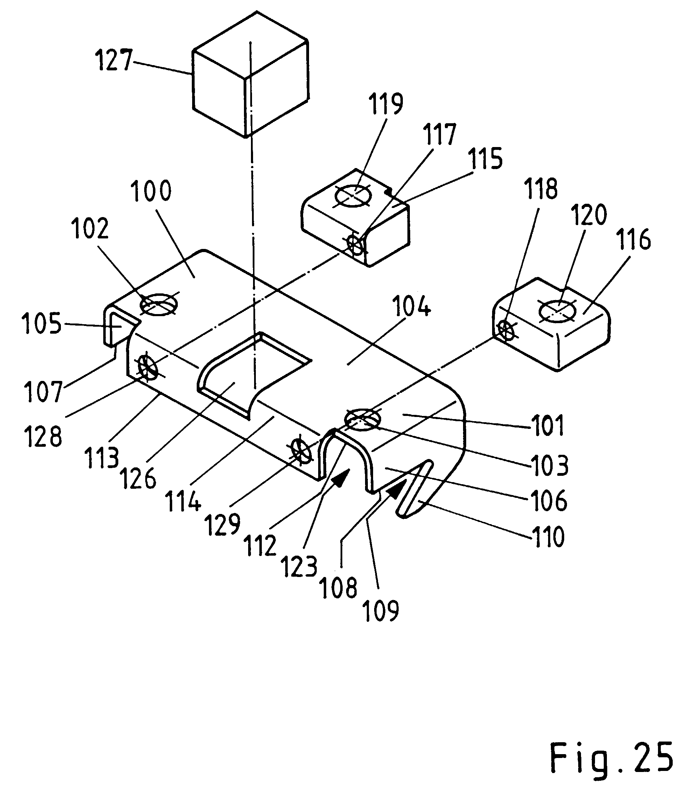

Die Figuren 25 bis 28 veranschaulichen eine anderstartige Bauform für die aus einem Blechzuschnitt hergestellten Klemmbacken. Zur Erläuterung sei zunächst auf Figur 25 verwiesen, die perspektivisch diese Klemmbakken zusammen mit weiteren Bauteilen in Explosionsdarstellung zeigt.

Wie aus Figur 25 ersichtlich, ist zunächst einmal von der Möglichkeit Gebrauch gemacht worden, die beiden nebeneinanderliegenden, aus einem Blechzuschnitt hergestellten Klemmbacken zu einem Bauteil zusammenzufassen und auf diese Weise in einem Arbeitsgang herstellen zu können. Diese Zusammenfassung weist parallel zur nicht dargestellten Flanschoberfläche mit Abstand angeordnete Abschnitte 100, 101 auf, in denen sich die Ausnehmungen 102, 103 für die nicht dargestellten Enden eines Bügels 6 befinden. Zur Schaffung der einteiligen Bauform zweier Klemmbacken sind die Abschnitte 100, 101 durch einen Brückenabschnitt 104 miteinander verbunden.

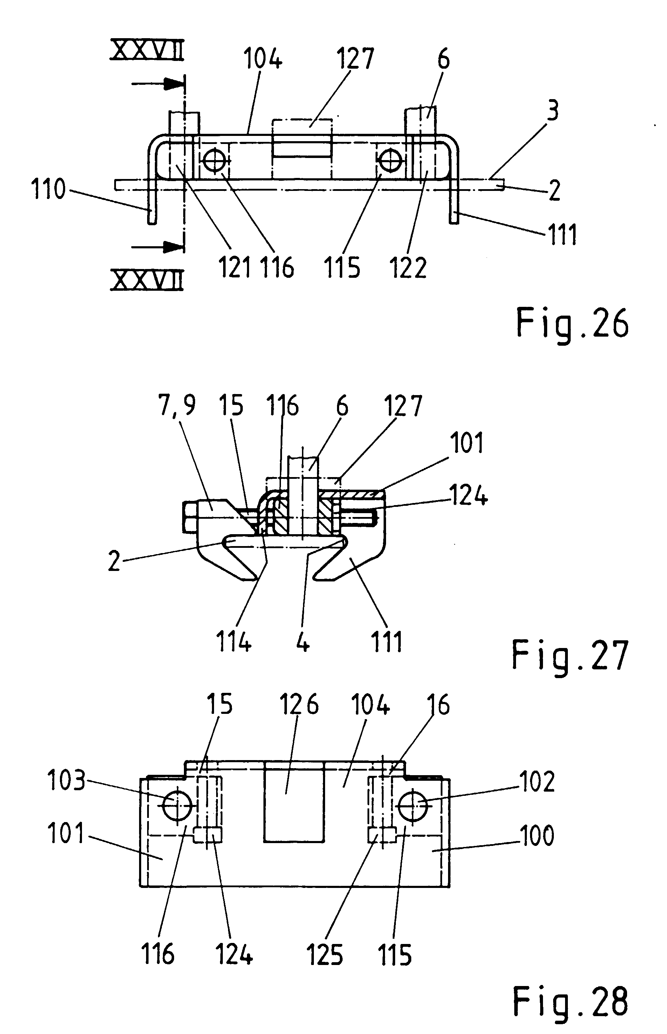

An die sich zur nichtdargestellten Flanschkante (beispielsweise Ziffer 4 in Figur 1) senkrecht erstreckenden Außenseiten der Abschnitte 100, 101 schließen sich zur Oberfläche des Flansches senkrechte Wandteile 105, 106 an, die mit ihrer Abschlußkante 107 bzw. 108 auf der Oberfläche (Ziffer 3 beispielsweise in Figur 1) des Flansches abgestützt sind. Die Wandteile 105, 106 überragen die genannte Flanschkante und es schließen sich an diese überragenden Wandteile die Flanschkante unter Bildung einer Klemmnut 109 umgreifende Nasen 110 und 111 (siehe Figur 27).

Zur Stabilisierung ist ferner vorgesehen, daß sich an die zur Flanschkante parallele, von dieser entfernt über der Flanschoberfläche gelegene Seite 112 der Abschnitte 100, 101 bzw. des Brückenabschnittes 104 eine davon abgebogene und mit ihrer Abschlußkante 113 auf der Oberfläche des Flansches abgestützte Wandung 114 mit Bohrungen 128, 129 für Spannelemente beispielsweise in Form von Spannschrauben 15, 16 anschließt.

Im Gegensatz zur Bauform beispielsweise gemäß Figur 1 sind hier nun als Widerlager für die Spannschrauben 15, 16 blockförmige Spannteile 115, 116 vorgesehen, die Gewindebohrungen 117 bzw. 118 für die Spannschrauben, andererseits aber auch Bohrungen 119, 120 für die in diesem Fall glattzylindrischen Enden 121, 122 (siehe Figur 26) aufweisen.

Werden diese Spannteile 115, 116 nun in den Zwischenraum 123 geschoben, der zwischen Oberfläche 3 des Flansches 2 und Abschnitten 100, 101 bzw. Brückenabschnitt 104 besteht, so können die Enden 121, 122 des Bügels 6 über die Ausnehmungen 102, 103 in die Bohrungen 119, 120 gesteckt werden. Werden nun die Spannschrauben 15, 16 angezogen, so wollen sich die Bohrungen 119, 120 aus ihrer Flucht mit den Ausnehmungen 102, 103 entfernen, wodurch die Bügelenden zwischen Bohrungen und Ausnehmungen festgeklemmt werden. Dadurch ist gleichzeitig auch die Abstützung der Spannteile 115, 116 an der in Figur 25 dargestellten Klemmbackenanordnung gegeben.

Die Figuren 26 bis 28 zeigen die so gegebene Rohrhalterung noch einmal in verschiedenen Ansichten, wobei Figur 26 eine Stirnansicht von Seiten der Nasen 110, 111, Figur 27 eine Schnittansicht gemäß der Schnittlinie XXVII - XXVII aus Figur 26 und Figur 28 eine Draufsicht auf den Gegenstand gemäß Figur 26 darstellt.

Insbesondere aus Figur 27 ist dabei auch zu erkennen, daß die Bohrungen 117, 118 der Spannteile 115, 116 nicht als Gewindebohrungen ausgeführt werden sein müssen, sondern daß Durchgangsbohrungen vorgesehen werden können, wobei dann die Spannschrauben 15, 16 über Stützteile 124, 125 mit Gewindebohrungen an den Spannteilen 115, 116 angreifen.

Wie insbesondere Figur 25 erkennen läßt, sind die Spannteile 115, 116 gleich ausgebildete und beispielsweise als einfaches Gußteil herzustellende Bauelemente, die für ihre Verwendung für beide Bügelenden nur jeweils umgedreht werden müssen. Schließlich ist aus den Figuren 25 bis 28 ersichtlich, daß im Brückenabschnitt 104 eine Ausnehmung 126 vorgesehen sein kann, um in diese ein quaderförmiges Gleitelement 27 als Auflage für das Rohr einzustecken, das dann auf der Oberfläche 3 des Flansches 2 aufliegt.

Bei dem Gegenstand gemäß Figur 27 bis 28 können selbstverständlich auch die aus einem Blechzuschnitt hergestellten Klemmbacken aus voneinander getrennten Teilen bestehen. Hierzu wäre es lediglich erforderlich, auch von den aufeinander zugewandten Kanten der Abschnitte 100, 101 Wandteile nach Art der Wandteile 105, 106 mit angeformten Nasen 110, 111 abzubiegen. In Ausnehmungen solcher Wandteile könnten dann wiederrum die Anhand der Figuren 14 bis 21 geschilderten Gleitelemente eingesteckt werden.

Im gleichen Sinne wäre es für die Anhand der Figur 1 beschriebene Klemmbackenbauform möglich, die Klemmbacken 8, 10 zu einem durchgehenden Bauteil miteinander zu verbinden.

## Patentansprüche

1. Halterung zum Lagern eines Rohres auf dem Flansch (2) eines Profilträgers (1) mit zwei mit Abstand zueinander parallel angeordneten Paaren von eine gegenseitige Distanz aufweisenden Klemmbacken (7 bis 10), die bezüglich jeden Paares auf einander gegenüberliegenden Flanschseiten die Flanschkanten (4, 5) mit einer Klemmnut (11 bis 14, 109) umgreifen und durch ein sich im wesentlichen quer zur Längsersteckung des Profilträgers (1) und parallel zur Oberfläche (3) des Flansches (2) erstreckendes, an den Klemmbacken (7 bis 10) einstellbar widergelagertes Spannelement (15, 16) miteinander verbunden sind, wobei der Abstand zwischen den Klemmbackenpaaren durch einen das Rohr übergreifenden Bügel (6) überbrückt ist, der mit seinen Enden (35, 121, 122) an den einer Flanschkante (4) zugeordneten Klemmbacken (8, 10) befestigt ist, wozu die Enden (35, 121, 122,) des Bügels (6) je in eine neben dem jeweiligen Spannelement (15, 16) gelegene Ausnehmung (33, 102, 103) eines Abschnittes (26, 100, 101) dieser Klemmbacken (8, 10) gesteckt sind,
dadurch gekennzeichnet,
daß Ausnehmungen (33, 102, 103) seitlich neben dem jeweiligen Spannelement (15, 16) angeordnet und die Enden (35, 121, 122) des Bügels (6) in den Ausnehmungen (33, 102, 103) durch an ihnen angreifende Rast-(40, 50, 60) oder Klemmmittel (115, 116) gehalten sind.

2. Halterung nach Anspruch 1,
dadurch gekennzeichnet,
daß die Klemmbacken (8, 10) den Abschnitt (26, 100 101) zur Oberfläche (3) des Flansches parallel und in Richtung auf diese einen namhaften Zwischenraum (28, 123) bildend aufweisen, und daß die Rast - (40, 50, 60) oder Klemmmittel (115, 116) auf der dem Flansch (2) zugewandten Seite des Abschnittes (26, 100, 101) angeordnet und mit diesem zusammenwirkend gehalten sind.

3. Halterung nach Anspruch 1 oder 2,
dadurch gekennzeichnet,
daß die Klemmbacken (8, 10) je aus einem sich im wesentlichen senkrecht zur Flanschkante (4) erstreckendem Blechzuschnitt so gebogen sind, daß aus dem Blechzuschnitt die seine Klemmnut (12, 14, 109) bildenden Teile geformt sind, und daß der Blechzuschnitt den Abschnitt (26, 100, 101) aufweist.

4. Halterung nach Anspruch 3,
dadurch gekennzeichnet, daß der Blechzuschnitt so gebogen ist, daß das eine Ende (24) des Blechzuschnittes unter Bildung der Klemmnut (12, 14) die Flanschkante (4) umgreift, der mittlere Bereich (25) des Blechzuschnittes auf der Oberfläche (3) des Flansches (2) aufliegt und das andere Ende (26) des Blechzuschnittes unter Bildung eines gebogenen Zwischenstückes (27) in eine zum mittleren Bereich (25) parallele und diesem gegenüber einen namhaften Zwischenraum (28) aufweisende Lage zurückgebogen ist, und daß die Enden (35) des Bügels (6) in eine neben der Flucht des jeweiligen Spannelementes (15, 16) gelegene Ausnehmung (33) wenigstens des anderen Endes (26) des Blechzuschnittes gesteckt und dort durch an ihnen angreifende und wenigstens mit dem anderen Ende des Blechzuschnittes zusammenwirkende Rastmittel (40, 50, 60) gehalten sind.

5. Halterung nach Anspruch 4,
dadurch gekennzeichnet,
daß von der freien Endkante (36) des anderen Endes (26) der Blechzuschnitte wenigstens eine Stütznase (37, 38) in Richtung auf den mittleren Bereich (25) der Blechzuschnitte abgebogen und endständig gegen diesen in Anlage ist.

6. Halterung nach Anspruch 5,
dadurch gekennzeichnet,
daß an beiden Seiten der freien Endkante (36) eine Stütznase (37, 38) vorgesehen ist.

7. Halterung nach einem oder mehreren Ansprüche 3 bis 6,
dadurch gekennzeichnet,
daß die freie Endkante (36) des anderen Endes (26) der Blechzuschnitte im Bereich oberhalb der zugeordneten Flanschkante (4) liegt.

8. Halterung nach einem oder mehreren der Ansprüche 3 bis 7,
dadurch gekennzeichnet,
daß für die Enden (35) des Bügels (6) der Ausnehmung (33) des anderen Endes (26) der Blechzuschnitte fluchtend eine entsprechende Ausnehmung (34) des mittleren Bereiches (25) der Blechzuschnitte gegenüberliegt.

9. Halterung nach Anspruch 3,
dadurch gekennzeichnet,
daß sich an die zur Flanschkante (4) senkrechten Seiten des Abschnittes (100, 101) von diesem abgebogene und zur Oberfläche (3) des Flansches (2) senkrechte Wandteile (105, 106) anschließen, daß die Wandteile (105, 106) mit ihrer Abschlußkante (107, 108) auf der Oberfläche (3) des Flansches (2) abgestützt sind, daß die Wandteile (105, 106) den Profilträger über die Flanschkante (4) hinaus überragen, und daß sich an die überragenden Wandteile die Flanschkante (4) unter Bildung einer Klemmnut (109) umgreifende Nasen (110, 111) anschließen.

10. Halterung nach Anspruch 9,
dadurch gekennzeichnet,
daß sich an die zur Flanschkante (4) parallele, von dieser entfernt über der Flanschoberfläche (3) gelegene Seite (112) des Abschnittes (100, 101, 104) eine von diesem abgebogene und mit ihrer Abschlußkante (113) auf der Oberfläche (3) des Flansches (2) abgestützte Wandung (114) anschließt.

11. Halterung nach einem oder mehreren der Ansprüche 3 bis 10,
dadurch gekennzeichnet,
daß das Widerlager der aus einem Blechzuschnitt gebildeten Klemmbacken (8, 10) für das ggf. eine Bohrung (39, 128, 129) des Zwischenstückes (27) bzw. der Wandung (114) durchdringende Spannelement (15, 16) ein Spannteil (31) ist, das in einer Durchbrechung (29) des anderen Endes (26) bzw. des Abschnittes (100, 101) des Blechzuschnittes sitzend den Zwischenraum (28, 123) überbrückt.

12. Halterung nach einem oder mehreren der Ansprüche 3 bis 11,
dadurch gekennzeichnet,
daß das Spannteil (31) in senkrecht zur Oberfläche (3) des Flansches (2) miteinander fluchtenden Durchbrechungen (29, 30) sowohl des mittleren Bereiches (25) als auch des anderen Endes (26) des Blechzuschnittes sitzt.

13. Halterung nach einem oder mehreren der Ansprüche 1 bis 12,
dadurch gekennzeichnet,
daß das Spannelement eine Spannschraube (15, 16) ist.

14. Halterung nach einem oder mehreren der Ansprüche 3 bis 13,
dadurch gekennzeichnet,
daß das Spannteil (31) ein quaderförmiges Bauteil mit einer Gewindebohrung für die Spannschraube (15, 16) ist.

15. Halterung nach einem oder mehreren der Ansprüche 1 bis 14,
dadurch gekennzeichnet,
daß die der anderen Flanschkante (5) zugeordneten Klemmbacken (7, 9) diese mit einer sich an einen Klemmbackenkörper (20) mit im wesentlichen würfelförmiger Außenkontur anschließenden keilförmigen Klemmnut (11, 13) umgreifen, das eine Flanke der Klemmnut (11, 13) durch eine Wand (22) des Klemmbackenkörpers (20) gebildet ist und auf der Oberfläche (3) des Flansches (2) aufliegt, und daß vom Klemmbackenkörper (20) das Spannelement (15, 16) bzw. die am Klemmbackenkörper (20) drehbar widergelagerte Spannschraube ausgeht.

16. Halterung nach einem oder mehreren der Ansprüche 1 bis 15,
dadurch gekennzeichnet,
daß die Rastmittel durch je eine im wesentlichen U-förmige, eine Querschnittsverjüngung (45) der Enden (35) des Bügels (6) mit nach außen gerichteten Ausbeulungen (43, 44) ihrer Schenkel (41, 42) umgreifende Blechklammer (40) gebildet sind, daß die Querschnittsverjüngung (45) unter Belassung eines endständigen Bundes (46) mit Abstand neben der Stirnkante der Bügelenden (35) angeordnet ist, und daß die Blechklammer (40) im Zwischenraum (28, 123) angeordnet und gegen den Bund (46) sowie das andere Ende (26) des Blechzuschnittes bzw. den Abschnitt (100, 101) in Anlage ist.

17. Halterung nach einem oder mehreren der Ansprüche 1 bis 15,
dadurch gekennzeichnet,
daß die Rastmittel durch je eine die Enden (35) des Bügels (6) und eine daran gebildete, in Richtung auf die Oberfläche (3) des Flansches (2) konisch zusammenlaufende Querschnittsverjüngung (55) formschlüssig umfassende, federnd aufweitbare Hülse (50, 60) gebildet sind, daß die Querschnittsverjüngung (55) unter Belassung eines endständigen Bundes (56) mit Abstand neben der Stirnkante der Bügelenden (35) angeordnet ist, und daß die im wesentlichen im Zwischenraum (28, 123) angeordnete Hülse (50, 60) einerseits in von der Flanschoberfläche (3) fortweisender Richtung an der Klemmbacke (8, 10), andererseits am Bund (56) in Anlage ist.

18. Halterung nach Anspruch 17,
dadurch gekennzeichnet,
daß die Hülse (50) aus wenigstens zwei gleichen, durch achsparallele Teilungsfugen (51) von einander getrennten Segmenten (52) besteht, und daß die Segmente (52) durch in Umfangsnuten (53) der Hülse (50) sitzende, radial federnd aufweitbare Ringe (54) zusammengehalten sind.

19. Halterung nach Anspruch 17,
dadurch gekennzeichnet,
daß die Hülse (50) am Abschnitt (26, 100, 101) in Anlage ist.

20. Halterung nach Anspruch 17,
dadurch gekennzeichnet,
daß die Hülse (60) unter Belassung einer achsparallelen Trennfuge (61) aus einem Blechabschnitt gebogen ist, und daß vom Hülsenmantel nach innen ausgebogene und sich in Richtung auf die Oberfläche (3) des Flansches (2) erstreckende Nasen (62) in die Querschnittsverjüngung (55) ragen und mit ihren Enden am Bund (56) in Anlage sind.

21. Halterung nach Anspruch 20,
dadurch gekennzeichnet,
daß die Hülse (60) die Ausnehmung (33, 102, 103) des anderen Endes (26) des Blechzuschnittes bzw. des Abschnittes (100, 101) mit ihrem glattzylindrischen Teil (65) durchragt.

22. Halterung nach Anspruch 21,
dadurch gekennzeichnet,
daß der zylindrische Teil (65) der Hülse (60) das andere Ende (26) des Blechzuschnittes bzw. den Abschnitt (100, 101) vom Profilträger (1) fort um einen namhaften Abschnitt (66) überragend ausgebildet ist.

23. Halterung nach einem oder mehreren der Ansprüche 17 bis 22,
dadurch gekennzeichnet,
daß die Hülse (50, 60) mit einer endständigen konischen Aufweitung (58, 63) in die dazu passend ausgebildete, gegebenenfalls aufgebördelte (64) Ausnehmung (34) des mittleren Bereiches (25) des Blechzuschnittes ragt.

24. Halterung nach einem oder mehreren der Ansprüche 1 bis 15,
dadurch gekennzeichnet,
daß das Widerlager der Klemmbacken für das Spannelement (15, 16) ein im Zwischenraum (28, 123) parallel zur Oberfläche (3) des Flansches (2) wenigstens in Grenzen verschiebbares Spannteil (115, 116) ist, und daß das Spannteil (115, 116) eine mit der Ausnehmung (33, 102, 103) des anderen Endes (26) des Blechzuschnittes bzw. des Abschnittes (100, 101) fluchtende Bohrung (119, 120) zur Aufnahme eines Endes (121, 122) des Bügels (6) aufweist.

25. Halterung nach Anspruch 24,
dadurch gekennzeichnet,
daß das Spannelement eine Spannschraube (15, 16) und das Spannteil (115, 116) ein quaderförmiges Bauteil mit einer Gewindebohrung (117, 118) für die Spannschraube ist.

26. Halterung nach Anspruch 1,
dadurch gekennzeichnet,
daß der Abstand zwischen den Klemmbackenpaaren (7, 8 bzw. 9, 10) durch ein an der Oberfläche (3) des Flansches (2) anliegendes Gleitelement (70, 75, 80) als Auflage für das Rohr überbrückt ist, und daß das Gleitelement (70, 75, 80) wenigstens mittelbar an den Spannelementen (15, 16) und/oder den Klemmbacken (8, 10) festgelegt ist.

27. Halterung nach Anspruch 26,
dadurch gekennzeichnet,
daß das Gleitelement (70, 75, 80) mit seitlichen Vorsprüngen (71 bis 74, 76, 81, 82) in den Zwischenraum (28) der Klemmbacken (8, 10) bzw. Ausnehmungen benachbarter Wandteile eingreift.

28. Halterung nach Anspruch 27,
dadurch gekennzeichnet,
daß die Vorsprünge (71 bis 74, 76, 81, 82) am Zwischenstück (27) und an den benachbarten Stütznasen (37, 38) in Anlage sind.

29. Halterung nach einem oder mehreren der Ansprüche 26 bis 28,
dadurch gekennzeichnet,
daß das Gleitelement (75) durch ein Hohlprofil gebildet ist, und daß die Vorsprünge durch die überstehenden Enden einer in das Hohlprofil eingesteckten Profilstange (76) gebildet sind.

30. Halterung nach einem oder mehreren der Ansprüche 26 bis 29,
dadurch gekennzeichnet,
daß das Hohlprofil aus Hohlprofilabschnitten (75) zusammengesetzt ist.

31. Halterung nach einem oder mehreren der Ansprüche 26 bis 30,
dadurch gekennzeichnet,
daß die Hohlprofilabschnitte (75) unterschiedliche Länge aufweisen.

32. Halterung nach einem oder mehreren der Ansprüche 26 bis 28,
dadurch gekennzeichnet,
daß das Gleitelement (80) durch ein Hohlprofil gebildet ist, daß die Vorsprünge (81, 82) Bestandteil auf die Hohlprofilenden aufgesetzter Zwischenelemente (83) sind, und daß die Zwischenelemente (83) mit Fortsätzen (84) formschlüssig in das Hohlprofil eingreifen.

33. Halterung nach Anspruch 26,
dadurch gekennzeichnet,
daß zwischen die Klemmbackenpaare (7, 8 bzw. 9, 10) ein aus Blech gebogenes Halteteil (90) für das Gleitelement eingesetzt ist, daß das Halteteil (90) eine zur Oberfläche (3) des Flansches (2) im wesentlichen parallele und mit Abstand angeordnete Wandung (91) mit einer Ausnehmung (92) zur Aufnahme des Gleitelementes aufweist, daß von der Wandung (91) zu den Flanschkanten (4, 5) im wesentlichen parallele und auf der Oberfläche (3) des Flansches (2) im wesentlichen senkrecht aufstehende Wandelemente (93, 94) ausgehen, daß ein Wandelement (93) formschlüssig passend zwischen den Klemmbacken (8, 10) sitzt, und daß das andere Wandelement (94) mit Aussparungen (95, 96) auf die Spannelemente (15, 16) aufgesteckt ist.

34. Halterung nach Anspruch 33,
dadurch gekennzeichnet,
daß die Ausnehmung (92) zur Aufnahme des Gleitelementes in den Ausnehmungsquerschnitt ragende Rastnasen (97) zur klemmenden Befestigung des Gleitelementes aufweist.

35. Halterung nach Anspruch 33 oder 34,
dadurch gekennzeichnet,
daß die Aussparungen (95, 96) des anderen Wandelementes (94) die Spannelemenete (15, 16) wenigstens teilweise hintergreifen.

36. Halterung nach einem oder mehreren der Ansprüche 1 bis 25,
dadurch gekennzeichnet,
daß die den Bügel (6) tragenden Klemmbacken der Klemmbackenpaare durch Ausbildung als ein beide Ausnehmungen (102, 103) für die Enden (121, 122) des Bügels (6) aufweisendes Bauteil einstückig miteinander verbunden sind.

37. Halterung nach Anspruch 36,
dadurch gekennzeichnet,
daß der durch die einstückige Ausbildung der Klemmbacken zwischen diesen gebildete, zur Oberfläche (3) des Flansches (2) parallele Brückenabschnitt (104) wenigstens eine Ausnehmung (126) zur Aufnahme eines Gleitelementes (127) als Auflage für das Rohr aufweist.

38. Halterung nach Anspruch 37,
dadurch gekennzeichnet,
daß das Gleitelement (127) auf der Oberfläche (3) des Flansches (2) aufliegt.

39. Halterung nach Anspruch 37,
dadurch gekennzeichnet,
daß das Gleitelement auf einer in Richtung auf die Flanschoberfläche (3) gehende Vertiefung des Brückenabschnittes (104) aufliegt.

40. Halterung nach Anspruch 39,
dadurch gekennzeichnet,
daß die Ausnehmungen zur Aufnahme des Gleitelementes in den die Vertiefung begrenzenden Seitenflächen ausgebildet sind.

41. Halterung nach einem oder mehreren der Ansprüche 26 bis 40,
dadurch gekennzeichnet,
daß das Gleitelement (70, 75, 80) ein im wesentlichen quaderförmiges Bauteil ist.

42. Halterung nach einem oder mehreren der Ansprüche 26 bis 41,
dadurch gekennzeichnet,
daß das Gleitelement (70, 75, 80) und/oder die Profilstange (76) und/oder die Zwischenelemente (83) Bauteile aus Polyamid und gegebenenfalls als Spritzteil oder Strangpreßteil hergestellt sind.

## Claims

1. Holding means for mounting a pipe on the flange (2) of a profiled girder (1), having two pairs of clamping jaws arranged in parallel and spaced apart from one another, which clamping jaws (7 to 10) are arranged at a distance from one another, the clamping jaws of each pair on opposite sides of the flange having a clamping channel (11 to 14, 109) that engages around the flange edges (4, 5) and being connected to one another by a tensioning element (15, 16) that extends substantially tranversely with respect to the longitudinal extent of the profiled girder (1) and parallel to the surface (3) of the flange (2) and is mounted adjustably on the clamping jaws (7 to 10), the distance between the pairs of clamping jaws being bridged by a bow-shaped member (6) that engages over the pipe, which bow-shaped member (6) is affixed by its ends (35, 121, 122) to the clamping jaws (8, 10) associated with one flange edge (4), for which purpose the ends (35, 121, 122) of the bow-shaped member (6) are each inserted into an opening (33, 102, 103) in a zone (26, 100, 101) of the clamping jaws (8, 10), the opening (33, 102, 103) being arranged alongside the respective tensioning element (15, 16),
characterised in that
openings (33, 102, 103) are arranged laterally alongside the respective tensioning element (15, 16), and the ends (35, 121, 122) of the bow-shaped member (6) are held in the openings (33, 102, 103) by locking means (40, 50, 60) or clamping means (115, 116) that engage them.

2. Holding means according to claim 1,
characterised in that
the clamping jaws (8, 10) have the zone (26, 100, 101), which forms a significant interspace (28, 123) parallel to the surface (3) of the flange and in the direction thereof; and the locking means (40, 50, 60) or clamping means (115, 116) are arranged on the side of the zone (26, 100, 101) that faces the flange (2) and are held in co-operation therewith.

3. Holding means according to claim 1 or 2,
characterised in that
the clamping jaws (8, 10) are each formed from a sheet metal blank which extends substantially perpendicularly to the flange edge (4) and which has been bent in such a manner that there are formed from the sheet metal blank the portions forming its clamping channel (12, 14, 109), and the sheet metal blank has the zone (26, 100, 101).

4. Holding means according to claim 3,
characterised in that
the sheet metal blank has been bent in such a manner that one end (24) of the sheet metal blank engages around the flange edge (4) to form the clamping channel (12, 14), the central region (25) of the sheet metal blank rests on the surface (3) of the flange (2) and the other end (26) of the sheet metal blank is bent back, with the formation of a curved intermediate piece (27), to form a layer parallel to the central region (25) and having a significant interspace (28) relative thereto; and the ends (35) of the bow-shaped member (6) are inserted into an opening (33) at least in the other end (26) of the sheet metal blank, which opening (33) is located alongside the line of the respective tensioning element (15, 16), and are held in place there by locking means (40, 50, 60) that engage the ends (35) and co-operate at least with the other end (26) of the sheet metal blank.

5. Holding means according to claim 4,
characterised in that
at least one support lug (37, 38) is bent downwards from the free end edge (36) of the other end (26) of the sheet metal blanks in the direction towards the central region (25) of the sheet metal blanks, the end of which support lug (37, 38) is in contact with that central region (25).

6. Holding means according to claim 5,
characterised in that
a support lug (37, 38) is provided on each side of the free end edge (36).

7. Holding means according to one or more of claims 3 to 6,
characterised in that
the free end edge (36) of the other end (26) of the sheet metal blanks is located in the region above the associated flange edge (4).

8. Holding means according to one or more of claims 3 to 7,
characterised in that
for the ends (35) of the bow-shaped member (6) there is arranged opposite the opening (33) in the other end (26) of the sheet metal blanks and in register therewith a corresponding opening (34) in the central region (25) of the sheet metal blanks.

9. Holding means according to claim 3,
characterised in that
the sides of the zone (100, 101) that are perpendicular to the flange edge (4) are adjoined to wall portions (105, 106) that are bent downwards from the zone (100, 101) and extend perpendicular to the surface (3) of the flange (2); the wall portions (105, 106) are supported by their final edge (107, 108) on the surface (3) of the flange (2); the wall portions (105, 106) project beyond the flange edge (4) of the profiled girder; and the projecting wall portions are adjoined to lugs (110, 111) which engage around the flange edge (4) to form a clamping channel (109).

10. Holding means according to claim 9,
characterised in that
the side (112) of the zone (100, 101, 104) parallel to the flange edge (4) and located at a distance therefrom above the flange surface (3) is adjoined to a wall (114) that is bent downwards from the zone (100, 101, 104) and is supported by its final edge (113) on the surface (3) of the flange (2).

11. Holding means according to any one of claims 3 to 10,
characterised in that
the clamping jaws (8, 10) which are formed from a sheet metal blank have as bearing means for the tensioning element (15, 16), which may pass through a bore (39, 128, 129) in the intermediate piece (27) or in the wall (114), a tensioning component (31) which, seated in an aperture (29) in the other end (26) or in the zone (100, 101) of the sheet metal blank, bridges the interspace (28, 123).

12. Holding means according to one or more of claims 3 to 11,
characterised in that
the tensioning component (31) is seated in apertures (29, 30) arranged in register with one another perpendicularly to the surface (3) of the flange (2) both in the central region (25) and in the other end (26) of the sheet metal blank.

13. Holding means according to one or more of claims 1 to 12,
characterised in that
the tensioning element is a tensioning screw (15, 16).

14. Holding means according to one or more of claims 3 to 13,
characterised in that
the tensioning component (31) is a cuboidal component having a threaded bore for the tensioning screw (15, 16).

15. Holding means according to one or more of claims 1 to 14,
characterised in that
the clamping jaws (7, 9) associated with the other flange edge (5) engage around the latter with a wedge-shaped clamping channel (11, 13) that adjoins a clamping jaw body (20) of substantially cube-shaped external shape; one flank of the clamping channel (11, 13) is formed by a wall (22) of the clamping jaw body (20) and rests on the surface (3) of the flange (2), and the tensioning element (15, 16) or the tensioning screw rotatably mounted on the clamping jaw body (20) extends out from the clamping jaw body (20).

16. Holding means according to one or more of claims 1 to 15,
characterised in that
the locking means are each formed by a substantially U-shaped sheet metal clip (40), the limbs (41, 42) of which have outwardly bulging portions (43, 44) which engage around a portion of reduced cross-section (45) at the ends (35) of the bow-shaped member (6); the portion of reduced cross-section (45) is located next to the end edge of the bow-shaped member ends (35), at a distance therefrom, leaving a terminal collar (46); and the sheet metal clip (40) is arranged in the interspace (28, 123) and is in contact with the collar (46) and with the other end (26) of the sheet metal blank or the zone (100, 101).

17. Holding means according to one or more of claims 1 to 15,
characterised in that
the locking means are each formed by a resiliently expansible sleeve (50, 60) which engages interlockingly around the ends (35) of the bow-shaped member (6) and a portion of reduced cross-section (55), formed thereon, that tapers conically towards the surface (3) of the flange (2); the portion of reduced cross-section (55) is located next to the end edge of the bow-shaped member ends (35), at a distance therefrom, leaving a terminal collar (56); and the sleeve (50, 60), which is arranged substantially in the interspace (28, 123), is on the one hand, in a direction pointing away from the flange surface (3), in contact with the clamping jaw (8, 10) and, on the other hand, in contact with the collar (56).

18. Holding means according to claim 17,
characterised in that
the sleeve (50) consists of at least two identical segments (52) separated from one another by axially parallel dividing joints (51); and the segments (52) are held together by radially resiliently expansible rings (54) which are seated in circumferential channels (53) in the sleeve (50).

19. Holding means according to claim 17,
characterised in that
the sleeve (50) is in contact with the zone (26, 100, 101).

20. Holding means according to claim 17,
characterised in that
the sleeve (60) is bent from a piece of sheet metal leaving an axially parallel dividing joint (61); and lugs (62), which are bent inwards from the sleeve wall and extend towards the surface (3) of the flange (2), project into the portion of reduced cross-section (55), the ends of the lugs (67) being in contact with the collar (56).

21. Holding means according to claim 20,
characterised in that
a smooth cylindrical portion (65) of the sleeve (60) projects through the opening (33, 102, 103) in the other end (26) of the sheet metal blank or the zone (100, 101).

22. Holding means according to claim 21,
characterised in that
the cylindrical portion (65) of the sleeve (60) is constructed to project above the other end (26) of the sheet metal blank or the zone (100, 101), in a direction away from the profiled girder (1), by a significant portion (66).

23. Holding means according to one or more of claims 17 to 22,
characterised in that
the sleeve (50, 60) has a terminal conical widened portion (58, 63) which extends into the matching opening (34), which is optionally beaded (64), in the central region (25) of the sheet metal blank.

24. Holding means according to one or more of claims 1 to 15,
characterised in that
the clamping jaws have as bearing means for the tensioning element (15, 16) a tensioning component (115, 116) that is displaceable in the interspace (28, 123), at least within limits, parallel to the surface (3) of the flange (2); and the tensioning component (115, 116) has a bore (119, 120) for receiving one end (121, 122) of the bow-shaped member (6), which bore (119, 120) is in alignment with the opening (33, 102, 103) in the other end (26) of the sheet metal blank or the zone (100,101).

25. Holding means according to claim 24,
characterised in that
the tensioning element is a tensioning screw (15, 16) and the tensioning component (115, 116) is a cuboidal component having a threaded bore (117, 118) for the tensioning screw.

26. Holding means according to claim 1,
characterised in that
the distance between the pairs of clamping jaws (7,8 and 9,10) is bridged by a slide element (70, 75, 80) resting against the surface (3) of the flange (2) as a support for the pipe; and the slide element (70, 75, 80) is fixed in position, at least indirectly, on the tensioning elements (15, 16) and/or the clamping jaws (8, 10).

27. Holding means according to claim 26,
characterised in that
the slide element (70, 75, 80) has lateral projections (71 to 74, 76, 81, 82) that engage in the interspace (28) in the clamping jaws (8, 10) or in openings in adjacent wall portions.

28. Holding means according to claim 27,
characterised in that
the projections (71 to 74, 76, 81, 82) are in contact with the intermediate piece (27) and with the adjacent support lugs (37, 38).

29. Holding means according to one or more of claims 26 to 28,
characterised in that
the slide element (75) is formed by a hollow profile; and the projections are formed by the projecting ends of a profiled rod (76) inserted into the hollow profile.

30. Holding means according to one or more of claims 26 to 29,
characterised in that
the hollow profile is composed of hollow profile sections (75).

31. Holding means according to one or more of claims 26 to 30,
characterised in that
the hollow profile sections (75) are of different lengths.

32. Holding means according to one or more of claims 26 to 28,
characterised in that
the slide element (80) is formed by a hollow profile; the projections (81, 82) are components of intermediate elements (83) attached to the hollow profile ends; and the intermediate elements (83) have extension pieces (84) that engage in the hollow profile by interlocking.

33. Holding means according to claim 26,
characterised in that
between the pairs of clamping jaws (7,8 and 9,10) there is inserted a holding member (90), bent from sheet metal, for the slide element; the holding member (90) has a wall (91) which is substantially parallel to the surface (3) of the flange (2) and is arranged at a distance therefrom and has an opening (92) for receiving the slide element; there extend outwards from the wall (91) to the flange edges (4, 5) substantially parallel wall elements (93, 94) which stand substantially perpendicular to the surface (3) of the flange (2); one wall element (93) fits interlockingly between the clamping jaws (8, 10), and the other wall element (94) is fitted over the tensioning elements (15, 16) by means of its openings (95, 96).

34. Holding means according to claim 33,
characterised in that
for receiving the slide element the opening (92) has locking lugs (97) which project into the cross-section of the opening for the purpose of clamping the slide element in position.

35. Holding means according to claim 33 or 34,
characterised in that
the openings (95, 96) in the other wall element (94) engage at least partly behind the tensioning elements (15, 16).

36. Holding means according to one or more of claims 1 to 25,
characterised in that
the clamping jaws of the clamping jaw pairs carrying the bow-shaped member (6) are integrally connected to one another by being constructed as a component having both openings (102, 103) for the ends (121, 122) of the bow-shaped member (6).

37. Holding means according to claim 36,
characterised in that
the bridge portion (104), which is formed between the clamping jaws as a result of the integral construction of the clamping jaws and extends parallel to the surface (3) ofthe flange (2), has at least one opening (126) for receiving a slide element (127) as support for the pipe.

38. Holding means according to claim 37,
characterised in that
the slide element (127) rests on the surface (3) of the flange (2).

39. Holding means according to claim 37,
characterised in that
the slide element rests on a recess in the bridge portion (104) extending towards the flange surface (3).

40. Holding means according to claim 39,
characterised in that
the openings for receiving the slide element are formed in the side faces bounding the recess.

41. Holding means according to one or more of claims 26 to 40,
characterised in that
the slide element (70, 75, 80) is a substantially cuboidal component.

42. Holding means according to one or more of claims 26 to 41,
characterised in that
the slide element (70, 75, 80) and/or the profiled rod (76) and/or the intermediate elements (83) are polyamide components and are optionally produced as injection-moulded components or extruded components.

## Revendications

1. Dispositif de fixation pour monter un tuyau sur l'aile (2) d'une poutre profilée (1), avec deux paires, disposées à distance parallèlement entre elles, de mors de serrage (7 à 10) présentant une distance mutuelle, les mors de chaque paire s'engageant, sur des côtés mutuellement opposés de l'aile, autour des arêtes (4, 5) de l'aile par une rainure de serrage (11 à 14, 109), et étant mutuellement reliés par un élément de serrage (15, 16), qui s'étend essentiellement transversalement au développement longitudinal de la poutre profilée (1) et parallèlement à la surface (3) de l'aile (2), et qui est monté en contre-appui sur les mors de serrage (7 à 10) avec possibilité de réglage, la distance entre les paires de mors de serrage étant surmontée par un étrier (6) engageant en recouvrement le tuyau, étrier qui est fixé par ses extrémités (35, 121, 122) sur les mors de serrage (8, 10) associés à l'une (4) des arêtes de l'aile, les extrémités (35, 121, 122) de l'étrier (6) étant à cet effet emboîtées chacune dans un évidement (33, 102, 103), situé auprès de l'élément de serrage respectif (15, 16), d'un tronçon (26, 100, 101) de ces mors de serrage (8, 10), **caractérisé** en ce que des évidements (33, 102, 103) sont disposés sur le côté de l'élément de serrage respectif (15, 16), et les extrémités (35, 121, 122) de l'étrier (6) sont maintenues dans les évidements (33, 102, 103) par des moyens de crantage (40, 50, 60) ou de serrage (115, 116) qui agissent sur elles.

2. Dispositif de fixation selon la revendication 1, **caractérisé** en ce que les mors de serrage (8, 10) présentent le tronçon (26, 100, 101) formant un espace intermédiaire important (28, 122) parallèlement à la surface (3) de l'aile et en direction de celle-ci, et en ce que les moyens de crantage (40, 50, 60) ou de serrage (115, 116) sont disposés sur le côté du tronçon (26, 100, 101) qui est tourné vers l'aile (2) et sont maintenus en coopération avec celui-ci.

3. Dispositif de fixation selon la revendication 1 ou 2, **caractérisé** en ce que les mors de serrage (8, 10) sont chacun cintrés à partir d'une pièce découpée en tôle s'étendant essentiellement perpendiculairement à l'arête (4) de l'aile, de telle sorte que sont formées à partir de la pièce de tôle les parties constituant sa rainure de serrage (12, 14, 109), et que la pièce de tôle présente le tronçon (26, 100, 101).

4. Dispositif de fixation selon la revendication 3, **caractérisé** en ce que la pièce de tôle est cintrée de telle sorte qu'une première extrémité (24) de la pièce de tôle s'engage autour de l'arête (4) de l'aile en formant la rainure de serrage (12, 14), que la région médiane (25) de la pièce de tôle repose sur la surface (3) de l'aile (2), et que l'autre extrémité (26) de la pièce de tôle est recourbée, en formant une partie intermédiaire coudée (27), dans une position parallèle à la région médiane (25) et présentant un espace intermédiaire important (28) par rapport à celle-ci, et en ce que les extrémités (35) de l'étrier (6) sont emboîtées dans un évidement (33), au moins de l'autre extrémité (26) de la pièce de tôle, qui est situé à côté de l'alignement de l'élément de serrage respectif (15, 16), et y sont maintenues par des moyens de crantage (40, 50, 60) qui agissent sur elles et coopèrent au moins avec l'autre extrémité de la pièce de tôle.

5. Dispositif de fixation selon la revendication 4, **caractérisé** en ce qu'au moins un ergot de soutien (37, 38) est recourbé à partir de l'arête terminale libre (36) de l'autre extrémité (26) des pièces de tôle en direction de la région médiane (25) des pièces de tôle, et s'applique en bout contre celle-ci.

6. Dispositif de fixation selon la revendication 5, **caractérisé** en ce qu'un ergot de soutien (37, 38) est prévu sur les deux côtés de l'arête terminale libre (36).

7. Dispositif de fixation selon une ou plusieurs des revendications 3 à 6, **caractérisé** en ce que l'arête terminale libre (36) de l'autre extrémité (26) des pièces de tôle se trouve dans la région située au-dessus de l'arête (4) associée de l'aile.

8. Dispositif de fixation selon une ou plusieurs des revendications 3 à 7, **caractérisé** en ce que, pour les extrémités (35) de l'étrier (6), un évidement correspondant (34) de la région médiane (25) des pièces de tôle fait face en alignement à l'évidement (33) de l'autre extrémité (26) des pièces de tôle.

9. Dispositif de fixation selon la revendication 3, **caractérisé** en ce que se raccordent, aux côtés du tronçon (100, 101) qui sont perpendiculaires à l'arête (4) de l'aile, des parties de paroi (105, 106) qui sont courbées à partir de ce tronçon et qui sont perpendiculaires à la surface (3) de l'aile (2), en ce que les parties de paroi (105, 106) s'appuient par leur arête terminale (107, 108) sur la surface (3) de l'aile (2), en ce que les parties de paroi (105, 106) dépassent de l'arête (4) de l'aile de la poutre profilée, et en ce que des ergots (110, 111), s'engageant autour de l'arête (4) de l'aile en formant une rainure de serrage (109), se raccordent aux parties de paroi dépassantes.

10. Dispositif de fixation selon la revendication 9, **caractérisé** en ce que se raccorde, au côté (112) du tronçon (100, 101, 104) qui est parallèle à l'arête (4) de l'aile et qui se trouve au-dessus de la surface (3) de l'aile à distance de cette arête, une paroi (114) qui est courbée à partir de ce côté et qui s'appuie sur la surface (3) de l'aile (2) par son arête terminale (113).

11. Dispositif de fixation selon une ou plusieurs des revendications 3 à 10, **caractérisé** en ce que l'élément de contre-appui des mors de serrage (8, 10) formés à partir d'une pièce de tôle, pour l'élément de serrage (15, 16) traversant éventuellement un perçage (39, 128, 129) de la partie intermédiaire (27) ou encore de la paroi (114), est une pièce de serrage (31) qui comble l'espace intermédiaire (28, 123) en étant montée dans un percement (29) de l'autre extrémité (26) ou encore du tronçon (100, 101) de la pièce de tôle.

12. Dispositif de fixation selon une ou plusieurs des revendications 3 à 11, **caractérisé** en ce que la pièce de serrage (31) est montée dans des percements respectifs (29, 30), en alignement mutuel perpendiculairement à la surface (3) de l'aile (2), de la région médiane (25) et de l'autre extrémité (26) de la pièce de tôle.

13. Dispositif de fixation selon une ou plusieurs des revendications 3 à 12, **caractérisé** en ce que l'élément de serrage est une vis de serrage (15, 16).

14. Dispositif de fixation selon une ou plusieurs des revendications 3 à 13, **caractérisé** en ce que la pièce de serrage (31) est une pièce parallélépipédique, pourvue d'un perçage fileté pour la vis de serrage (15, 16),

15. Dispositif de fixation selon une ou plusieurs des revendications 1 à 14, **caractérisé** en ce que les mors de serrage (7, 9) qui sont associés à l'autre arête (5) de l'aile s'engagent autour de cette arête par une rainure de serrage cunéiforme (11, 13) qui se raccorde à un corps (20) de mors de serrage de contour extérieur essentiellement cubique, l'un des flancs de la rainure de serrage (11, 13) étant formé par une paroi (22) du corps (20) de mors de serrage et reposant sur la surface (3) de l'aile (2), et en ce que l'élément de serrage (15, 16), ou encore la vis de serrage montée en contre-appui et à rotation sur le corps (20) de mors de serrage, part du corps (20) de mors de serrage.

16. Dispositif de fixation selon une ou plusieurs des revendications 1 à 15, **caractérisé** en ce que les moyens de crantage sont formés chacun par une attache en tôle (40) essentiellement en forme de U, qui s'engage autour d'un rétrécissement de section (45) des extrémités (35) de l'étrier (6) par des bossages (43, 44), dirigés vers l'extérieur, de ses branches (41, 42), en ce que le rétrécissement de section (45) est disposé, en laissant un collet terminal (46), à distance auprès de l'arête frontale des extrémités (35) de l'étrier, et en ce que l'attache en tôle (40) est disposée dans l'espace intermédiaire (28, 123) et est en application contre le collet (46) ainsi que contre l'autre extrémité (26) de la pièce de tôle ou encore contre le tronçon (100, 101).

17. Dispositif de fixation selon une ou plusieurs des revendications 1 à 15, **caractérisé** en ce que les moyens de crantage sont formés chacun par une douille (50, 60) pouvant être élastiquement élargie, entourant en engagement positif les extrémités (35) de l'étrier (6) et un rétrécissement de section (55) formé sur celles-ci et convergeant coniquement vers la surface (3) de l'aile (2), en ce que le rétrécissement de section (55) est disposé, en laissant un collet terminal (56), à distance auprès de l'arête frontale des extrémités (35) de l'étrier, et en ce que la douille (50, 60), disposée pour l'essentiel dans l'espace intermédiaire (28, 123), est en application d'une part, dans la direction s'éloignant de la surface (3) de l'aile, contre le mors de serrage (8, 10), et d'autre part contre le collet (56).

18. Dispositif de fixation selon la revendication 17, **caractérisé** en ce que la douille (50) est constituée d'au moins deux segments identiques (52), mutuellement séparés par des joints de séparation (51) parallèles à l'axe, et en ce que les segments (52) sont maintenus ensemble par des anneaux (54), qui sont montés dans des rainures circonférentielles (53) de la douille (50) et qui peuvent être élastiquement élargis en direction radiale.

19. Dispositif de fixation selon la revendication 17, **caractérisé** en ce que la douille (50) est en application contre le tronçon (26, 100, 101).

20. Dispositif de fixation selon la revendication 17, **caractérisé** en ce que la douille (60) est courbée à partir d'un élément de tôle en laissant un joint de séparation (61) parallèle à l'axe, et en ce que des ergots (62), recourbés vers l'intérieur à partir de l'enveloppe de la douille et s'étendant en direction de la surface (3) de l'aile (2), font saillie dans le rétrécissement de section (55) et sont en application, par leurs extrémités, contre le collet (56).

21. Dispositif de fixation selon la revendication 20, **caractérisé** en ce que la douille (60) traverse, par sa partie cylindrique lisse (65), l'évidement (33, 102, 103) de l'autre extrémité (26) de la pièce de tôle ou encore du tronçon (100, 101).

22. Dispositif de fixation selon la revendication 21, **caractérisé** en ce que la partie cylindrique (65) de la douille (60) est réalisée en dépassant, par un tronçon important (66), de l'autre extrémité (26) de la pièce de tôle ou encore du tronçon (100, 101), en éloignement de la poutre profilée (1)

23. Dispositif de fixation selon une ou plusieurs des revendications 17 à 22, **caractérisé** en ce que la douille (50, 60) fait saillie, par un élargissement terminal conique (58, 63), dans l'évidement (34) de configuration adaptée, éventuellement pourvu d'un bord rabattu (64), de la région médiane (25) de la pièce de tôle.

24. Dispositif de fixation selon une ou plusieurs des revendications 1 à 15, **caractérisé** en ce que l'élément de contre-appui des mors de serrage pour l'élément de serrage (15, 16) est une pièce de serrage (115, 116) mobile en translation, au moins de façon limitée, dans l'espace intermédiaire (28, 123) parallèlement à la surface (3) de l'aile (2), et en ce que la pièce de serrage (115, 116) présente un perçage (119, 120), en alignement avec l'évidement (33, 102, 103) de l'autre extrémité (26) de la pièce de tôle ou encore du tronçon (100, 101) et destiné à recevoir une extrémité (121, 122) de l'étrier (6).

25. Dispositif de fixation selon la revendication 24, **caractérisé** en ce que l'élément de serrage est une vis de serrage (15, 16), et la pièce de serrage (115, 116) une pièce parallélépipédique avec un perçage fileté (117, 118) pour la vis de serrage.

26. Dispositif de fixation selon la revendication 1, **caractérisé** en ce que la distance entre les paires (7, 8 ou 9, 10) de mors de serrage est comblée par un élément d'appui (70, 75, 80) s'appliquant sur la surface (3) de l'aile (2) et servant de surface d'appui pour le tuyau, et en ce que l'élément d'appui (70, 75, 80) est fixé en position au moins indirectement contre les éléments de serrage (15, 16) et/ou contre les mors de serrage (8, 10).

27. Dispositif de fixation selon la revendication 26, **caractérisé** en ce que l'élément d'appui (70, 75, 80) s'engage, par des saillies latérales (71 à 74, 76, 81, 82), dans l'espace intermédiaire (28) des mors de serrage (8, 10) ou respectivement dans des évidements de parties de paroi voisines.

28. Dispositif de fixation selon la revendication 27, **caractérisé** en ce que les saillies (71 à 74, 76, 81, 82) sont en application contre la partie intermédiaire (27) et contre les ergots de soutien voisins (37, 38).

29. Dispositif de fixation selon une ou plusieurs des revendications 26 à 28, **caractérisé** en ce que l'élément d'appui (75) est formé par un profilé creux, et en ce que les saillies sont formées par les extrémités dépassantes d'une barre profilée (76) emboîtée dans le profilé creux.

30. Dispositif de fixation selon une ou plusieurs des revendications 26 à 29, **caractérisé** en ce que le profilé creux est composé de tronçons (75) de profilé creux.

31. Dispositif de fixation selon une ou plusieurs des revendications 26 à 30, **caractérisé** en ce que les tronçons (75) de profilé creux présentent des longueurs différentes.

32. Dispositif de fixation selon une ou plusieurs des revendications 26 à 28, **caractérisé** en ce que l'élément d'appui (80) est formé par un profilé creux, en ce que les saillies (81, 82) font partie d'éléments intermédiaires (83) placés sur les extrémités du profilé creux, et en ce que les éléments intermédiaires (83) s'engagent positivement dans le profilé creux par des prolongements (84).

33. Dispositif de fixation selon la revendication 26, **caractérisé** en ce qu'un élément de maintien en tôle pliée (90) pour l'élément d'appui est inséré entre les paires de mors de serrage (7, 8 ou 9, 10), en ce que l'élément de maintien (90) présente une paroi (91), disposée à distance essentiellement parallèlement à la surface (3) de l'aile (2) et pourvue d'un évidement (92) pour recevoir l'élément d'appui, en ce que des éléments de paroi (93, 94), essentiellement parallèles aux arêtes (4, 5) de l'aile et se dressant essentiellement verticalement sur la surface (3) de l'aile (2), partent de la paroi (91), en ce qu'un élément de paroi (93) repose en engagement positif et en ajustement entre les mors de serrage (8, 10), et en ce que l'autre élément de paroi (94) est emboîté par des évidements (95, 96) sur les éléments de serrage (15, 16).

34. Dispositif de fixation selon la revendication 33, **caractérisé** en ce que l'évidement (92) destiné à recevoir l'élément d'appui présente des ergots de crantage (97) qui font saillie dans la section de l'évidement et sont destinés à fixer par serrage l'élément d'appui.

35. Dispositif de fixation selon la revendication 33 ou 34, **caractérisé** en ce que les évidements (95, 96) de l'autre élément de paroi (94) s'engagent au moins pour partie derrière les éléments de serrage (15, 16).

36. Dispositif de fixation selon une ou plusieurs des revendications 1 à 25, **caractérisé** en ce que les mors de serrage des paires de mors de serrage qui portent l'étrier (6) sont mutuellement reliés d'un seul tenant sous la forme d'un élément présentant les deux évidements (102, 103) pour les extrémités (121, 122) de l'étrier (6).

37. Dispositif de fixation selon la revendication 36, **caractérisé** en ce que la partie de pont (104), formée entre les mors de serrage par la réalisation d'un seul tenant de ceux-ci, partie qui est parallèle à la surface (3) de l'aile (2), présente au moins un évidement (126) pour recevoir un élément d'appui (127) comme surface d'appui pour le tuyau.

38. Dispositif de fixation selon la revendication 37, **caractérisé** en ce que l'élément d'appui (127) repose sur la surface (3) de l'aile (2).

39. Dispositif de fixation selon la revendication 37, **caractérisé** en ce que l'élément d'appui repose sur un renfoncement de la partie de pont (104) qui s'étend en direction de la surface (3) de l'aile.

40. Dispositif de fixation selon la revendication 39, **caractérisé** en ce que les évidements destinés à recevoir l'élément d'appui sont configurés dans les faces latérales qui délimitent le renfoncement.

41. Dispositif de fixation selon une ou plusieurs des revendications 26 à 40, **caractérisé** en ce que l'élément d'appui (70, 75, 80) est un élément essentiellement parallélépipédique.

42. Dispositif de fixation selon une ou plusieurs des revendications 26 à 41, **caractérisé** en ce que l'élément d'appui (70, 75, 80) et/ou la barre profilée (76) et/ou les éléments intermédiaires (83) sont des éléments en polyamide et sont éventuellement fabriqués sous forme de pièces moulées par injection ou de pièces extrudées.
